# EUROPEAN PATENT SPECIFICATION

(11) **EP 4 314 421 B1**
(45) Date of publication and mention of the grant of the patent: **25.12.2024**
(21) Application number: 22717758.1
(22) Date of filing: 22.03.2022
(51) Int. Cl.: E02F 9/28, F16B 21/06

(54) **FIXING SYSTEM OF A WEAR ELEMENT IN A SUPPORT ELEMENT OF AN EARTH MOVING MACHINE THROUGH A PIN, AND A RETAINER**
BEFESTIGUNGSSYSTEM EINES VERSCHLEISSELEMENTS IN EINEM TRAGELEMENT EINER ERDBEWEGUNGSMASCHINE DURCH EINEN STIFT UND EINE HALTERUNG
SYSTÈME DE FIXATION D'UN ÉLÉMENT D'USURE DANS UN ÉLÉMENT DE SUPPORT D'UN ENGIN DE TERRASSEMENT PAR L'INTERMÉDIAIRE D'UNE BROCHE ET D'UN DISPOSITIF DE RETENUE

(30) Priority: 22.03.2021 EP 21382226
(43) Date of publication of application: 07.02.2024
(73) Proprietor: Metalogenia Research & Technologies S.L., 08005 Barcelona (ES)
(72) Inventor: ROL CORREDOR, Javier, 08930 Sant Adrià del Besós Barcelona (ES); PICON MANJÓN, Francesc, 08320 El Masnou Barcelona (ES); MARTINEZ MAÑÉ, Angel, 08303 Mataró Barcelona (ES); MARQUEZ LLINAS, Jordi, 08223 Terrassa Barcelona (ES); PÉREZ SORIA, Francisco, 08430 La Roca del Vallès Barcelona (ES)
(74) Representative: Curell Suñol S.L.P.
(86) International application number: PCT/EP2022/057545
(87) International publication number: WO 2022/200383

(56) References cited:
- EP-A2- 1 630 426
- US-A- 3 997 989

## Description

### Field of the Invention

The invention relates to a retainer suitable for blocking a pin, the pin being suitable for fixing a wear element in a support element of an earth moving machine, the wear element comprising a cavity where, in an assembled position in which the wear element is assembled on the support element, a nose present in the support element is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the through opening defines a longitudinal axis, this longitudinal axis having a direction of insertion corresponding to the direction in which the pin is introduced in the through opening to achieve the assembled position.

The invention also relates to a pin suitable for fixing a wear element in a support element of an earth moving machine, the wear element comprising a cavity where, in an assembled position in which the wear element is assembled on the support element, a nose present in the support element is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the through opening defines a longitudinal axis, this longitudinal axis having a direction of insertion corresponding to the direction in which the pin is introduced in the through opening to achieve the assembled position, where the pin defines a longitudinal axis of the pin and has a first end with actuation means suitable for rotating the pin according to its longitudinal axis, and a second end, opposite the first end.

The invention also relates to a wear element of an earth moving machine, the wear element comprising a cavity where, in an assembled position in which the wear element is assembled on a support element, a nose present in the support element is housed in the cavity, where the cavity is demarcated by side walls with two openings arranged in two of the side walls opposite one another, which are aligned with one another and aligned, in the assembled position, with a through nose opening arranged in the nose, where the openings and the nose opening are suitable for housing therein a pin suitable for fixing the wear element in the nose in the assembled position, where the openings define a longitudinal axis, where the longitudinal axis has a direction of insertion corresponding to the direction in which the pin is introduced in the openings to achieve the assembled position, where the pin defines a longitudinal axis of the pin and has a first end with actuation means suitable for rotating the pin according to its longitudinal axis, and a second end, opposite the first end, where, in the assembled position, the first end is housed in one of the openings, referred to as inlet opening, which is a through opening, and the second end is housed in the other one of the openings, referred to as outlet opening.

The invention also relates to an earth moving machine comprising a support element with a nose suitable for having a wear element assembled thereon by means of a pin, the wear element comprising a cavity where, in an assembled position in which the wear element is assembled on the support element, the nose is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the nose opening defines a longitudinal axis, the longitudinal axis having a direction of insertion corresponding to the direction in which the pin is introduced in the through opening to achieve the assembled position.

The invention likewise relates to a wear element of an earth moving machine, the wear element comprising a cavity where, in an assembled position in which the wear element is assembled on a support element, a nose present in the support element is housed in the cavity, where the cavity is demarcated by side walls with a through opening arranged in one of the side walls, which is aligned, in the assembled position, with a nose opening, arranged in the nose, where the through opening and the nose opening are suitable for housing therein a pin suitable for fixing the wear element in the nose in the assembled position, where the through opening defines a longitudinal axis, where the longitudinal axis has a direction of insertion corresponding to the direction in which the pin is introduced in the through opening to achieve the assembled position, where the pin defines a longitudinal axis of the pin and has a first end with actuation means suitable for rotating the pin according to its longitudinal axis, and a second end, opposite the first end, where, in the assembled position, the first end is housed in the through opening, referred to as inlet opening, and the second end is housed inside the nose opening.

Lastly, the invention also relates to a wear assembly of an earth moving machine comprising a wear element and a pin, the wear element comprising a cavity where, in an assembled position in which the wear element is assembled on a support element, a nose present in the support element is housed in the cavity, where the cavity is demarcated by side walls with a through opening arranged in one of the side walls, which is aligned, in the assembled position, with a nose opening, arranged in the nose, where the through opening and the nose opening are suitable for housing therein the pin fixing the wear element in the nose in the assembled position, where the through opening defines a longitudinal axis, where the longitudinal axis has a direction of insertion corresponding to the direction in which the pin is introduced in the through opening to achieve the assembled position, where the pin defines a longitudinal axis of the pin and has a first end with actuation means suitable for rotating the pin according to its longitudinal axis, and a second end, opposite the first end, where, in the assembled position, the first end is housed in the through opening, referred to as inlet opening, and the second end is housed inside the nose opening.

In general, it must be taken into account that, in use, the wear element, the support element, the pin, and the retainer form an assembly that is used as such. However, the wear element suffers much more during use, so its mean service life is less than that of the support element or the pin. Thus, for example, it is common for the mean service life of an adapter (which is a common support element) to be 3 to 5 times longer (or even more) than the mean service life of a tooth of the shovel (which is a common wear element) of an earth moving machine. It is therefore common for the wear element to be fixed to the adapter in a manner such that it can be readily disassembled, usually by means of a pin, and for these three elements (wear elements, adapter, and pin) to be sold not only as assemblies formed by the three components (or by the adapter-wear element pair) but also separately, and it is necessary for the operations of changing out a used wear element with a new one to really be as quick, as simple, and as trouble-free as possible, which includes the pin not sustaining significant deformations and being easy to remove. It is therefore necessary to provide claims which protect the support element, the wear element, and the pin individually, because this is how said elements are usually found on the market. In turn, as will be seen below, the retainer is obtained based on a manufacturing technology (metallic or polymeric sheet material) that is very different from wear element and support element manufacturing technology (normally metallic cast parts). As a consequence, the retainer is probably manufactured by entities different from those manufacturing the wear element and the support element. Furthermore, although the retainer will be sold preassembled, forming an assembly with the wear element, in some cases, there is also the possibility of the retainer being sold separately, for example for the assembly thereof on the support element. It is therefore also necessary to have an independent claim relating to the retainer. Despite the plurality of independent claims compelled by the foregoing, these independent claims present the necessary unity of invention since they all share the same inventive concept.

### State of the Art

Earth moving machines are used in excavation, demolition, construction, mining, dredging, loading works, and similar activities. In general, they have a shovel or bucket in which the material is collected. The shovel or bucket is subjected to high stresses and significant erosion, particularly in the region of the lip (also referred to as blade). Therefore, the shovel or bucket usually has a plurality of wear elements protecting it from wear and impacts and/or improving ground penetration, such as teeth, supports, or tooth bar (also referred to as adapters) and/or (front and side) guards, for example.

All these wear or protection elements, and particularly the teeth, are subjected to high mechanical stresses, plastic deformations, and excessive wear. For this reason, they must typically be replaced every so often when breakage or wear thereof so requires. Since these elements have a limited service life, there is an ongoing interest in reducing manufacturing costs, as well as in facilitating the replacement of these elements to the extent possible. Furthermore, these machines can work in a wide range of applications, in which it may be necessary to change the design of the teeth in order to improve bucket performance.

The wear elements can be attached to other wear elements (such as a tooth attached to an adapter) and/or can be attached to the lip or blade of the bucket or shovel (such as a tooth attached to a lip or an adapter attached to a lip). In the present description and claims, the expression "support element" has been used to refer to any of these alternatives, for example, to the adapter when reference is made to the "adapter + wear element" pair, but to the lip of the shovel when reference is made to the "lip + wear element" or "lip + adapter" pair.

The wear or protection elements can be fixed in a mechanical manner (easier and quicker to change) or in a welded manner (more cost efficient but hard to change and with the risk of damaging the blade with the weld), depending on the degree of ground abrasiveness and on the dimensions of the machine. It must also be taken into account that large earth moving machines, particularly those operating in quarries and mines, are essential for production at said sites. Therefore, the downtimes of these machines can affect their productivity in a very substantial manner and it is of great interest to be able to change the wear elements in a quick and safe manner in the field, without having to bring the machine or the bucket to the workshop so that special equipment can be used. Therefore, it is usually advantageous to mechanically fix the wear elements and, to that end, to use a reversible blocking or fixing device, for example a pin.

The wear element usually has a cavity in which there is housed a nose arranged in the support element (for example, the adapter) on which the wear element will be assembled. The present invention relates to geometries of this type. However, there are various alternatives for fixing the wear element in the support element:
1. The support element has in its nose a through nose opening and the wear element has, in the side walls of its cavity, two openings (an inlet opening and an outlet opening). A single pin is housed in these three openings fixing the wear element to the nose of the support element. The outlet opening can be a through opening such that the final end (referred to in the present description and claims as "second end") of the pin can be seen from the outside.
2. The support element has in its nose a nose opening (generally, a blind opening) and the wear element has, in one of the side walls of its cavity, an opening (an inlet opening). A pin is housed in these two openings fixing the wear element to the nose of the support element. In this case, the second end of the pin is inside the nose opening.
3. There is a variant of the preceding case in which the nose has two nose openings (although it could be one through opening) and the wear element has, in the side walls of its cavity, two inlet openings. In this case, fixing is performed by means of two pins, with the second end of both pins being inside the respective nose openings (or the through nose opening). The two pins (and the corresponding openings) can be aligned with one another or can be arranged along two non-coinciding axes.

The present invention is applicable to any of these three cases.

In certain cases, the cavity and the nose are switched, i.e., the nose is in the wear element and the cavity is in the support element. Apart from that, all the observations made above are valid and, in fact, perfectly applicable to the present invention. Therefore, it must be understood that this opposite case is also an object of the present invention and that the claims also include this opposite case or relate at least to a case that is completely equivalent to that indicated in the claims.

In some cases, the pin is housed inside the nose opening before positioning the wear element on the nose. The pin then extends (or is moved) until it is housed in the opening present in the side wall of the cavity. In other cases, the wear element is first positioned on the nose, and then the pin (or pins) is inserted through the inlet opening present in the side wall of the cavity so that it penetrates the nose opening (exiting through the opposite side or not, depending on the three alternatives mentioned above). The present invention relates to this second group of cases. A known earth moving machine and wear elements have been disclosed in US3997989A. Furthermore, a retainer is known from EP1630426A2.

### Description of the Invention

The object of the invention is a new fixing system of a wear element in a support element of an earth moving machine through a pin and a retainer. The new system comprises several elements and subassemblies.

Therefore, an object of the present invention is a retainer of the type indicated above characterized in that:
the retainer is formed from a sheet material comprising a perimeter segment, suitable for being fixed to a perimeter region of the through opening or of the nose opening, and a flexible flange joined at one end to the perimeter segment and suitable for extending towards the through opening or the nose opening, where the free end of the flexible flange is suitable for staying shifted forward, according to the direction of insertion, with respect to the perimeter segment.

Another object of the present invention is a pin of the type indicated above characterized in that: to provide for an earth moving machine according to claim 1, a wear element according to claim 2 and 14, a retainer according to claim 3 and a pin according to claim 7.

The pin has a fixing region, where the fixing region coincides, in the direction of the longitudinal axis, with the through opening or with the beginning of the nose opening in the assembled position, where the fixing region has a blocking segment having a step, where the riser of the step is oriented towards the first end and is suitable for housing the free end of a flexible flange of a retainer, when the retainer is formed from a sheet material comprising a perimeter segment and the flexible flange joined at one end to the perimeter segment, the perimeter segment being fixed to a perimeter region of the through opening or of the nose opening, and the flexible flange extending towards the through opening or the nose opening, where the free end of the flexible flange stays shifted forward, according to the direction of insertion, with respect to the perimeter segment, thereby blocking the axial movement of the pin in the direction opposite the direction of insertion, the fixing region also comprising an unblocking segment arranged at the same distance as the blocking segment, in the direction of the longitudinal axis of the pin, with respect to the first end, the unblocking segment being displaced angularly, according to a rotation of the longitudinal axis of the pin, with respect to the blocking segment, where the unblocking segment does not have any step but rather has a smooth segment, in which the side surface of the pin extends continuously to the end of the second end.

In fact, the new system anchors the pin in its final position with a significant axial retention. The pin, when assembled, abuts against the flexible flange. Since the free end of the flexible flange stays shifted forward, according to the direction of insertion, the pin can bend the flange elastically and continue its forward movement, without having to exert a high force. When the pin reaches its final assembly position, the flange coincides with the step and can return to its original position, with the free end being in the lower edge of the step. Furthermore, a "clicking" sound will be produced, which will help the operator to know that the pin has reached its final position and that blocking through the flange has taken place. In contrast, the pin cannot move backward without plastically deforming the flange, which would require a very high force. A highly reliable fixing of the pin is thus achieved. However, if the pin is to be disassembled, it is sufficient to rotate it around its longitudinal axis as a result of the actuation means until the flange comes out of the blocking segment of the fixing region (i.e., no longer facing the step) and is located in the unblocking segment of the fixing region. This unblocking segment does not have a step with the riser oriented towards the first end, but rather has a smooth segment, in which the side surface of the pin extends continuously (i.e., without bumps, steps, or interruptions) all the way to the end of the second end (i.e., in this unblocking segment, the pin has a surface that is continuous to/flush with the rest of the side surface of the pin all the way to the second end), which allows the free end of the flange to slide on the surface of the pin without offering a high resistance.

The retainer being a sheet material refers to the fact that said retainer has a substantially laminar geometry (with a thickness that is much smaller than its other dimensions). It should not be understood that the retainer is an essentially metallic element, although said retainer being metallic is a preferred option as it will better withstand high temperatures and stresses. However, another preferred option is that the retainer is a polymeric material, which can constitute a particularly cost-effective alternative in the cases of systems with few mechanical and thermal requirements. In the case in which the retainer is metallic, a particularly advantageous option is austenitic stainless steel, which can withstand high temperatures without losing mechanical properties. An example could be steel for springs according to European Standard EN 10132-4:2000 C67S.

The perimeter segment of the retainer being fixed to a perimeter region of the through opening or of the nose opening must be understood as the perimeter segment being fixed close to the through opening or the nose opening, i.e., in what can be considered as the perimeter region of these openings. The exact distance between the perimeter segment and the through opening (or the nose opening) is not relevant for the present invention, and one skilled in the art will be able to determine the distance most suitable for each case depending on other requirements not related with the present invention.

The new system has a plurality of additional advantages:
- The retainer has a remarkably simple geometry, and in the case where it is metallic, said retainer can be obtained by means of die-cutting from a sheet of metallic material. The cost is therefore very low.
- The pin can be assembled and disassembled without requiring special tools. Preferably, the actuation means comprise an opening coaxial with the longitudinal axis of the pin and arranged at the first end, where the opening has a non-circular cross-section (preferably polygonal, and very preferably square). Therefore, the operator only needs a wrench with a head with the shape corresponding to the opening to rotate the pin. The process of disassembling the pin can be performed without having to use a hammer.
- It is a solution that does not place the geometry, the wear element, or the nose at a disadvantage. Other current alternatives are always bulkier, making it necessary to sacrifice material of the wear element and/or of the nose to leave space for the pin and the corresponding retention means, or the pin and/or the retention elements must be protected, which also negatively conditions the design of the wear element and/or of the nose.

Preferably, the perimeter segment of the retainer extends forming a closed perimeter frame, where the flange extends towards the inside of the frame. In this case, in the assembled position, the perimeter frame circumscribes the through opening or the nose opening. The flange extends towards the inside of the frame but, simultaneously, as has already been indicated, extends (or stays shifted) forward according to the direction of insertion. In other words, it moves towards the so-called longitudinal axis of the through opening but away from the frame according to the direction of the longitudinal axis. The closed perimeter frame is preferably rectangular or square. However, any geometry is possible, either non-rounded geometries or even rounded geometries, particularly if the perimeter segment has snap-fitting means (see below), because the snap-fitting means would then be responsible for ensuring that the retainer stays in place.

When the perimeter segment forms a closed perimeter frame, it is advantageous for it to have two flanges, arranged in opposite regions of the closed perimeter frame, the flanges being joined to the closed perimeter frame and extending towards the inside of the closed perimeter frame, where the free ends of both flexible flanges are suitable for staying shifted forward, according to the direction of insertion, with respect to the closed perimeter frame. A double fixing and a symmetrical distribution of stresses on the pin are thereby achieved without any additional cost.

Preferably, the perimeter segment has first snap-fitting means suitable for being assembled on second snap-fitting means present in the perimeter region of the opening, thereby fixing the retainer to the perimeter region. In fact, as will be seen below in the examples, these snap-fitting means can be readily incorporated and are very easy to assemble. Preferably, the snap-fitting means fix the retainer not only in the direction of the longitudinal axis but also in two transverse directions, thereby achieving the complete fixing of the retainer. This solution is particularly advantageous when the perimeter segment is a closed perimeter frame. Alternatively, the snap-fitting means fix the retainer in the direction of the longitudinal axis and also in only one transverse direction, specifically in a flange direction, defined as follows: the flange defines a flange axis that extends from the end through which the flange is joined to the perimeter segment to the free end, and the projection of the flange axis in a plane comprising the perimeter segment defines the flange direction. As will be seen later, this alternative is also part of a preferred embodiment of the invention.

Preferably the flange has reinforcing means. Advantageously, this reinforcing means is a reinforced region manufactured by deep drawing.

In general, as stated before, the flange defines a flange axis that extends from the end through which the flange is joined to the perimeter segment to the free end. In a preferred embodiment, a section of the flange with any plane parallel to the flange axis and perpendicular to a plane comprising the perimeter segment has a first zone, close to the end through which the flange is joined to the perimeter segment, that has a curvature that is convex when seen from the plane comprising the perimeter segment, and has a second zone, close to the free end, that has a curvature that is concave when seen from the plane comprising the perimeter segment.

In turn, the pin preferably has a fixing region having two blocking segments arranged at the same distance, in the direction of the longitudinal axis of the pin, with respect to the first end and arranged on circumferentially opposite sides, where each blocking segment has a step, where the riser of each step is oriented towards the first end and is suitable for housing the free end of one of the flexible flanges of a retainer, when the retainer has a perimeter segment that extends forming a closed perimeter frame and two flanges arranged in opposite regions of the closed perimeter frame, the flanges being joined to the closed perimeter frame and extending towards the inside of the closed perimeter frame, the closed perimeter frame being fixed to a perimeter region of the through opening or of the nose opening, where the free ends of both flexible flanges are suitable for staying shifted forward, according to the direction of insertion, with respect to the closed perimeter frame, thereby blocking the axial movement of the second end in the direction opposite the direction of insertion, the fixing region also comprising two unblocking segments arranged at the same distance as the blocking segments, in the direction of the longitudinal axis of the pin, with respect to the first end, the unblocking segments being displaced angularly, according to a rotation of the longitudinal axis of the pin, with respect to the blocking segments, where the unblocking segments do not have the step but rather have a smooth segment, in which the side surface of the pin extends continuously to the end of the second end. This pin is particularly interesting when the retainer has a closed perimeter frame and two flanges, because each of the flanges will then interact with one of the blocking and unblocking segments. However, this pin can also be used when two independent retainers are used, each of them with a flange, both retainers being arranged on opposite sides of the corresponding opening.

Preferably the riser of the step leans against the direction of insertion at an angle greater than 0 degrees, so that an upper end of the riser, more separated from the longitudinal axis of the pin than a lower end of the riser, is closer to the first end of the pin than the lower end. This angle is preferably greater than 2 degrees and, more preferably, is greater than 4 degrees.

Preferably the riser has an upper end, more separated from the longitudinal axis of the pin than a lower end of the riser, and the blocking segment has a ramp, opposed to the riser, and a lower portion extending from the lower end of the raiser to a lower end of the ramp. Advantageously, the lower portion is inclined towards the longitudinal axis of the pin so that said lower portion is closer to the longitudinal axis of the pin at the lower end of the raiser than at the lower end of the ramp. Alternatively or additionally, preferably the lower portion has a recessed portion, closer to the raiser than to the ramp, for housing the free end of the flange.

As will be described in detail below, the pin consists of two preferred embodiments depending on which of the three alternatives for fixing the wear element in the support element is applied in the invention:
- Pin having the fixing region close to the second end.
- Pin having the fixing region close to the first end.

That the fixing region is close to the second end means that it is closer to the second end than to the first end (according to the longitudinal axis of the pin), and vice versa.

Preferably, the pin has a stop at its first end. This stop prevents the pin from being introduced too far. It can also be used for guiding the position of the pin during its introduction, such that it is properly oriented.

A particularly advantageous embodiment of the invention is when it is applied to the first alternative for fixing the wear element in the support element, i.e., when the support element has in its nose a through nose opening and the wear element has, in the side walls of its cavity, two openings (an inlet opening and an outlet opening), with a single pin which is housed in these three openings fixing the wear element to the nose of the support element. In this case, the object of the invention is a wear element of an earth moving machine, the wear element comprising a cavity where, in an assembled position in which the wear element is assembled on a support element, a nose present in the support element is housed in the cavity, where the cavity is demarcated by side walls with two openings arranged in two of the side walls opposite one another, which are aligned with one another and aligned, in the assembled position, with a through nose opening arranged in the nose, where the openings and the nose opening are suitable for housing therein a pin suitable for fixing the wear element in the nose in the assembled position, where the openings define a longitudinal axis, where the longitudinal axis has a direction of insertion corresponding to the direction in which the pin is introduced in the openings to achieve the assembled position, where the pin defines a longitudinal axis of the pin and has a first end with actuation means suitable for rotating the pin according to its longitudinal axis, and a second end, opposite the first end, where, in the assembled position, the first end is housed in one of the openings, referred to as inlet opening, which is a through opening, and the second end is housed in the other one of the openings, referred to as outlet opening.

The wear element comprises a retainer fixed to the inner face of the side wall comprising the outlet opening, the retainer being formed from a sheet material comprising a perimeter segment fixed to the inner face in a perimeter region of the outlet opening, and a flexible flange joined at one end to the perimeter segment and extending towards the outlet opening, where the free end of the flexible flange is inside the outlet opening.

Besides the advantages already mentioned above, supplying the wear element together with the retainer has the following advantages:
- The position of the retainer in the outlet opening means that the pin can be introduced almost entirely before being subjected to friction by the flexible flanges.
- The service life of the retainer is preferably the same as the service life of the wear element. By supplying both elements as a unit, logistics management is made easier. Furthermore, it can be supplied to the user already assembled, saving labor costs.
- In the case where the outlet opening is a through opening, a very simple visual control system to check that the pin has been assembled correctly is provided.
- In various solutions of the state of the art, the retention means are in the head of the pin. The head of the pin is already a weakened region due to the presence of the actuation means. With the present solution, the retention means (or the fixing region, and particularly the blocking segments) are close to the second end.

This preferred solution is compatible with the preferred solutions that are already indicated above (alone or in combination) for the retainer as an independent element, specific to this given case. In particular:
- The perimeter segment of the retainer extends forming a closed perimeter frame completely bordering the outlet opening.
- The retainer has two flexible flanges arranged in opposite regions of the closed perimeter frame and joined to the closed perimeter frame and extending towards the outlet opening, where the free end of both flexible flanges is inside the outlet opening.
- The retainer is metallic and is preferably made of austenitic stainless steel.
- The retainer is attached to the wear element by means of welding.
- The retainer is made of plastic.
- The perimeter segment has first snap-fitting means and the inner face of the side wall has second corresponding snap-fitting means, where the first snap-fitting means are suitable for being assembled on the second snap-fitting means, thereby fixing the retainer to the inner face. This is applicable to the case in which the retainer is not attached to the wear element by means of welding.

Another advantageous solution is when the inner face of the side wall has a recess suitable for housing therein the perimeter segment. In this manner, the thickness of the retainer is prevented from being able to interfere with the entry of the nose in the cavity. A better protection of the retainer against lateral stresses applied to the assembly is also achieved, particularly smashing between the wear element and the support element when they contact one another laterally is prevented.

Another advantageous solution is when the side wall with the inlet opening has, on its outer face, a recess extending to the inlet opening, suitable for housing therein a stop arranged at the first end of the pin.

In general, a preferred embodiment of the invention consists of a wear element of an earth moving machine, the wear element comprising a cavity where, in an assembled position in which the wear element is assembled on a support element, a nose present in the support element is housed in the cavity, where the cavity is demarcated by side walls with two openings arranged in two of the side walls opposite one another, and are aligned with one another and aligned, in the assembled position, with a through nose opening arranged in the nose, where the openings and the nose opening are suitable for housing therein a pin suitable for fixing the wear element in the nose in the assembled position, where the openings define a longitudinal axis, where the longitudinal axis has a direction of insertion corresponding to the direction in which the pin is introduced in the openings to achieve the assembled position, where the pin defines a longitudinal axis of the pin and has a first end with actuation means suitable for rotating the pin according to its longitudinal axis, and a second end, where, in the assembled position, the first end is housed in one of the openings, referred to as inlet opening, which is a through opening and the second end is housed in the other one of the openings, referred to as outlet opening.

The wear element comprises a retainer according to the invention, where the perimeter segment is fixed to the inner face of the side wall comprising the outlet opening, in a perimeter region of the outlet opening, and where the flexible flange extends towards the outlet opening, where the free end of the flexible flange is inside the outlet opening.

Another preferred embodiment of the invention is when the wear element with the retainer incorporated and the corresponding pin are grouped together. In that sense, another object of the invention is a wear assembly of an earth moving machine comprising a wear element and a pin, the wear element comprising a cavity where, in an assembled position in which the wear element is assembled on a support element, a nose present in the support element is housed in the cavity, where the cavity is demarcated by side walls with two openings arranged in two of the side walls opposite one another, and are aligned with one another and aligned, in the assembled position, with a through nose opening arranged in the nose, where the openings and the nose opening are suitable for housing therein the pin fixing the wear element in the nose in the assembled position, where the openings define a longitudinal axis, where the longitudinal axis has a direction of insertion corresponding to the direction in which the pin is introduced in the openings to achieve the assembled position, where the pin defines a longitudinal axis of the pin and has a first end with actuation means suitable for rotating the pin according to its longitudinal axis, and a second end, opposite the first end, where, in the assembled position, the first end is housed in one of the openings, referred to as inlet opening, which is a through opening, and the second end is housed in the other one of the through openings, referred to as outlet opening.

The wear element comprises a retainer fixed to the inner face of the side wall comprising the outlet opening, the retainer being formed from a sheet material comprising a perimeter segment fixed to the inner face in a perimeter region of the outlet opening, and a flexible flange joined at one end to the perimeter segment and extending towards the outlet opening, where the free end of the flexible flange is inside the outlet opening.

The pin has a fixing region, where the fixing region coincides, in the direction of the longitudinal axis, with the outlet opening in the assembled position, where the fixing region has a blocking segment having a step, where the riser of the step is oriented towards the first end and houses the free end of the flexible flange, thereby blocking the axial movement of the pin in the direction opposite the direction of insertion, the fixing region also comprising an unblocking segment arranged at the same distance as the blocking segment, in the direction of the longitudinal axis of the pin, with respect to the first end, the unblocking segment being displaced angularly, according to a rotation of the longitudinal axis of the pin, with respect to the blocking segment, where the unblocking segment does not have said step but rather has a smooth segment, in which the side surface of the pin extends continuously to the end of the second end.

This preferred solution is again compatible with the preferred solutions that are already indicated above (alone or in combination) for the retainer and the pin as independent elements, specific to this given case, as well as for the wear element with the retainer incorporated. In particular:
- The perimeter segment of the retainer extends forming a closed perimeter frame completely bordering the outlet opening.
- The retainer has two flexible flanges arranged in opposite regions of the closed perimeter frame and joined to the closed perimeter frame and extending towards the outlet opening, where the free end of both flexible flanges is inside the outlet opening, and in that the fixing region of the pin has two blocking segments arranged at the same distance, in the direction of the longitudinal axis of the pin, with respect to the first end and arranged on circumferentially opposite sides, where each blocking segment has a step, where the riser of each step is oriented towards the first end and is suitable for housing the free end of one of the flexible flanges of the retainer, thereby blocking the axial movement of the second end in the direction opposite the direction of insertion, the fixing region also comprising two unblocking segments arranged at the same distance as the blocking segments, in the direction of the longitudinal axis of the pin, with respect to the first end, the unblocking segments being displaced angularly, according to a rotation of the longitudinal axis of the pin, with respect to the blocking segments, where the unblocking segments do not have the step but rather have a smooth segment, in which the side surface of the pin extends continuously to the end of the second end.

- The retainer is metallic and is preferably made of austenitic stainless steel.
- The retainer is attached to the wear element by means of welding.
- The retainer is made of plastic.
- The perimeter segment has first snap-fitting means and the inner face of the side wall has second corresponding snap-fitting means, where the first snap-fitting means are suitable for being assembled on the second snap-fitting means, thereby fixing the retainer to the inner face. This is applicable to the case in which the retainer is not attached to the wear element by means of welding.
- The inner face of the side wall has a recess in which the perimeter segment is housed.
- The side wall with the inlet opening has, on its outer face, a recess extending to the inlet opening, suitable for housing therein a stop arranged at the first end of the pin.

In general, another preferred embodiment consists of a wear assembly of an earth moving machine comprising a wear element according to the invention, and a pin according to the invention, where the fixing region coincides, in the direction of the longitudinal axis, with the outlet opening in the assembled position, where the riser of the step houses the free end of the flexible flange, thereby blocking the axial movement of the pin in the direction opposite the direction of insertion.

Another particularly advantageous embodiment of the invention is when it is applied to the second or third alternatives for fixing the wear element in the support element, i.e., when, in general, the second end of the pin is inside the nose opening. In these cases, in the assembled position, the retainer will not be in a region close to the second end of the pin (like in the solutions of the invention applicable to the first alternative for fixing the wear element in the support element), rather the retainer will be in a region close to the first end of the pin. The solutions offered by the invention in these cases can be divided into two large blocks, depending on whether the retainer is fixed to the nose of the support element or to the wear element.

Within the first block, the object of the invention is an earth moving machine comprising a support element with a nose suitable for having a wear element assembled thereon by means of a pin, the wear element comprising a cavity where, in an assembled position in which the wear element is assembled on the support element, the nose is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the nose opening defines a longitudinal axis, the longitudinal axis having a direction of insertion corresponding to the direction in which the pin is introduced in the through opening to achieve the assembled position. It comprises a retainer which is formed from a sheet material comprising a perimeter segment, fixed to a perimeter region of the nose opening, and a flexible flange joined at one end to the perimeter segment and extending towards the inside of the nose opening.

Like in the preceding cases, this preferred solution is compatible with the preferred solutions that are already indicated above (alone or in combination) for the retainer and the pin as independent elements, specific to this given case. In particular:
- The perimeter segment of the retainer extends forming a closed perimeter frame completely bordering the nose opening.
- The retainer has two flexible flanges arranged in opposite regions of the closed perimeter frame, the flanges being joined to the closed perimeter frame and both extending towards the nose opening, where the free ends of both flexible flanges are inside the nose opening.
- The retainer is metallic and is preferably made of austenitic stainless steel.
- The retainer is made of plastic.
- The perimeter segment of the retainer has first snap-fitting means suitable for being assembled on second snap-fitting means present in the perimeter region of the nose opening, thereby fixing the retainer to the perimeter region.
- The perimeter region of the nose opening has a recess in which the perimeter segment is housed.
- The nose has two nose openings (which may or may not be aligned) or has a through nose opening, the wear element has two inlet openings and there are two retainers, one for each nose opening (or for each end of the through nose opening). In other words, the concept is exactly the same as in the case of one opening, but in duplicate, such that two pins can be used for fixing the wear element to the nose.
- It comprises the pin, where the pin defines a longitudinal axis of the pin and has a first end with actuation means suitable for rotating the pin according to its longitudinal axis, and a second end, opposite the first end, where, in the assembled position, the first end is housed in the through opening and the second end is housed in the nose opening, where the pin has a fixing region, where the fixing region coincides, in the direction of the longitudinal axis, with the beginning of the nose opening in the assembled position, where the fixing region has a blocking segment having a step, where the riser of the step is oriented towards the first end and houses the free end of the flexible flange of the retainer, thereby blocking the axial movement of the pin in the direction opposite the direction of insertion, the fixing region also comprising an unblocking segment arranged at the same distance as the blocking segment, in the direction of the longitudinal axis of the pin, with respect to the first end, the unblocking segment being displaced angularly, according to a rotation of the longitudinal axis of the pin, with respect to the blocking segment, where the unblocking segment does not have any step but rather has a smooth segment, in which the side surface of the pin extends continuously to the end of the second end.
- As an additional improvement to the preceding point, the retainer has two flexible flanges arranged in opposite regions of the closed perimeter frame and joined to the closed perimeter frame and extending towards the nose opening, where the free end of both flexible flanges is inside the nose opening, and in that the fixing region of the pin has two blocking segments arranged at the same distance, in the direction of the longitudinal axis of the pin, with respect to the first end and arranged on circumferentially opposite sides, where each blocking segment has a step, where the riser of each step is oriented towards the first end and is suitable for housing the free end of one of the flexible flanges of the retainer, thereby blocking the axial movement of the second end in the direction opposite the direction of insertion, the fixing region also comprising two unblocking segments arranged at the same distance as the blocking segments, in the direction of the longitudinal axis of the pin, with respect to the first end, the unblocking segments being displaced angularly, according to a rotation of the longitudinal axis of the pin, with respect to the blocking segments, where the unblocking segments do not have the step but rather have a smooth segment, in which the side surface of the pin extends continuously to the end of the second end.

In general, when the inner face of the side wall of the wear element or the perimeter region of the nose opening have a recess for housing the perimeter segment of the retainer, a preferred solution consists in the following: taking into account that: [a] the flange defines a flange axis that extends from the end through which the flange is joined to the perimeter segment to the free end, [b] the projection of the flange axis in a plane comprising the perimeter segment defines a flange direction, [c] the perimeter segment has an outer perimeter segment edge, and [d] the recess has a recess edge, then it is advantageous that there is a gap, in the flange direction, between the outer perimeter segment edge and the recess edge, so that the flange is able to be moved according to the flange direction within the recess. It is particularly advantageous when this preferred solution is combined with the preferred alternative (commented above), that the snap-fitting means fix the retainer in the direction of the longitudinal axis and also in only one transverse direction, specifically in the flange direction.

In general, another preferred embodiment is an earth moving machine comprising a support element with a nose suitable for having a wear element assembled thereon by means of a pin, the wear element comprising a cavity where, in an assembled position in which the wear element is assembled on the support element, the nose is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the nose opening defines a longitudinal axis, the longitudinal axis having a direction of insertion corresponding to the direction in which the pin is introduced in the through opening to achieve the assembled position. It comprises a retainer according to the invention, where the perimeter segment is fixed to a perimeter region of the nose opening and the flexible flange extends towards the inside of the nose opening. Preferably, the machine comprises a pin according to the invention, where the fixing region coincides, in the direction of the longitudinal axis, with the beginning of the nose opening in the assembled position. Within the second block (with the retainer fixed to the wear element), another object of the invention is a wear element of an earth moving machine, the wear element comprising a cavity where, in an assembled position in which the wear element is assembled on a support element, a nose present in the support element is housed in the cavity, where the cavity is demarcated by side walls with a through opening arranged in one of the side walls, which is aligned, in the assembled position, with a nose opening, arranged in the nose, where the through opening and the nose opening are suitable for housing therein a pin suitable for fixing the wear element in the nose in the assembled position, where the through opening defines a longitudinal axis, where the longitudinal axis has a direction of insertion corresponding to the direction in which the pin is introduced in the through opening to achieve the assembled position, where the pin defines a longitudinal axis of the pin and has a first end with actuation means suitable for rotating the pin according to its longitudinal axis, and a second end, opposite the first end, where, in the assembled position, the first end is housed in the through opening, referred to as inlet opening, and the second end is housed inside the nose opening. The wear element comprises a retainer fixed to the inner face of the side wall comprising the inlet opening, the retainer being formed from a sheet material comprising a perimeter segment fixed to the inner face in a perimeter region of the inlet opening, and a flexible flange joined at one end to the perimeter segment and extending towards the nose opening, where the free end of the flexible flange stays shifted forward, according to the direction of insertion, with respect to the perimeter segment.

Like in the preceding cases, this preferred solution is compatible with the preferred solutions that are already indicated above (alone or in combination) for the retainer as an independent element, specific to this given case. In particular:
- The perimeter segment of the retainer extends forming a closed perimeter frame completely bordering the inlet opening.
- The retainer has two flexible flanges arranged in opposite regions of the closed perimeter frame and joined to the closed perimeter frame and extending towards the nose opening, where the free end of both flexible flanges stays shifted forward, according to the direction of insertion, with respect to the perimeter segment.

- The retainer is metallic and is preferably made of austenitic stainless steel.
- The retainer is attached to the wear element by means of welding.
- The retainer is made of plastic.
- The perimeter segment has first snap-fitting means and the inner face of the side wall has second corresponding snap-fitting means, where the first snap-fitting means are suitable for being assembled on the second snap-fitting means, thereby fixing the retainer to the inner face. This is applicable to the case in which the retainer is not attached to the wear element by means of welding.
- The inner face of the side wall has a recess suitable for housing therein the perimeter segment.
- The side wall with the inlet opening has, on its outer face, a recess extending to the inlet opening, suitable for housing therein a stop arranged at the first end of the pin.
- The wear element has two inlet openings and there are two retainers, one for each inlet opening, such that the wear element can be fixed to a nose having two nose openings (which may or may not be aligned) or a through nose opening, with two pins. In other words, the concept is exactly the same as in the case of one inlet opening, but in duplicate, such that two pins can be used for fixing the wear element to the nose.

Another preferred embodiment is a wear element of an earth moving machine, the wear element comprising a cavity where, in an assembled position in which the wear element is assembled on a support element, a nose present in the support element is housed in the cavity, where the cavity is demarcated by side walls with a through opening arranged in one of the side walls, which is aligned, in the assembled position, with a nose opening arranged in the nose, where the through opening and the nose opening are suitable for housing therein a pin suitable for fixing the wear element in the nose in the assembled position, where the through opening defines a longitudinal axis, where the longitudinal axis has a direction of insertion corresponding to the direction in which the pin is introduced in the through opening to achieve the assembled position, where the pin defines a longitudinal axis of the pin and has a first end with actuation means suitable for rotating the pin according to its longitudinal axis, and a second end, where, in the assembled position the first end is housed in the through opening, referred to as inlet opening, and the second end is housed inside the nose opening. The

wear element comprises a retainer according to the invention, where the perimeter segment is fixed to the inner face of the side wall comprising the inlet opening in a perimeter region of the inlet opening, and where the flexible flange extends towards the nose opening, where the free end of the flexible flange stays shifted forward, according to the direction of insertion, with respect to the perimeter segment.

Likewise, an assembly formed by a wear element and the corresponding pin, similar to what has been done above, can be defined within the second block. In that sense, another object of the invention is a wear assembly of an earth moving machine comprising a wear element and a pin, the wear element comprising a cavity where, in an assembled position in which the wear element is assembled on a support element, a nose present in the support element is housed in the cavity, where the cavity is demarcated by side walls with a through opening arranged in one of the side walls, which is aligned, in the assembled position, with a nose opening, arranged in the nose, where the through opening and the nose opening are suitable for housing therein the pin fixing the wear element in the nose in the assembled position, where the through opening defines a longitudinal axis, where the longitudinal axis has a direction of insertion corresponding to the direction in which the pin is introduced in the through opening to achieve the assembled position, where the pin defines a longitudinal axis of the pin and has a first end with actuation means suitable for rotating the pin according to its longitudinal axis, and a second end, opposite the first end, where, in the assembled position, the first end is housed in the through opening, referred to as inlet opening, and the second end is housed inside the nose opening. The wear element comprises a retainer fixed to the inner face of the side wall comprising the inlet opening, the retainer being formed from a sheet material comprising a perimeter segment fixed to the inner face in a perimeter region of the inlet opening, and a flexible flange joined at one end to the perimeter segment and extending towards the nose opening, where the free end of the flexible flange stays shifted forward, according to the direction of insertion, with respect to the perimeter Segment. The pin has a fixing region, where the fixing region coincides, in the direction of the longitudinal axis, with the inlet opening in the assembled position, where the fixing region has a blocking segment having a step, where the riser of the step is oriented towards the first end and houses the free end of the flexible flange, thereby blocking the axial movement of the pin in the direction opposite the direction of insertion, the fixing region also comprising an unblocking segment arranged at the same distance as the blocking segment, in the direction of the longitudinal axis of the pin, with respect to the first end, the unblocking segment being displaced angularly, according to a rotation of the longitudinal axis of the pin, with respect to the blocking segment, where the unblocking segment does not have any step but rather has a smooth segment, in which the side surface of the pin extends continuously to the end of the second end.

Once again, this preferred solution is compatible with the preferred solutions that are already indicated above (alone or in combination) for the retainer and the pin as independent elements, specific to this given case. In particular:
- The perimeter segment of the retainer extends forming a closed perimeter frame completely bordering the outlet opening.
- The retainer has two flexible flanges arranged in opposite regions of the closed perimeter frame and joined to the closed perimeter frame and extending towards the nose opening, where the free end of both flexible flanges stays shifted forward, according to the direction of insertion, with respect to the perimeter segment, and in that the fixing region of the pin has two blocking segments arranged at the same distance, in the direction of the longitudinal axis of the pin, with respect to the first end and arranged on circumferentially opposite sides, where each blocking segment has a step, where the riser of each step is oriented towards the first end and is suitable for housing the free end of one of the flexible flanges of the retainer, thereby blocking the axial movement of the second end in the direction opposite the direction of insertion, the fixing region also comprising two unblocking segments arranged at the same distance as the blocking segments, in the direction of the longitudinal axis of the pin, with respect to the first end, the unblocking segments being displaced angularly, according to a rotation of the longitudinal axis of the pin, with respect to the blocking segments, where the unblocking segments do not have the step but rather have a smooth segment, in which the side surface of the pin extends continuously to the end of the second end.
- The retainer is metallic and is preferably made of austenitic stainless steel.
- The retainer is attached to the wear element by means of welding.
- The retainer is made of plastic.
- The perimeter segment has first snap-fitting means and the inner face of the side wall has second corresponding snap-fitting means, where the first snap-fitting means are suitable for being assembled on the second snap-fitting means, thereby fixing the retainer to the inner face. This is applicable to the case in which the retainer is not attached to the wear element by means of welding
- The inner face of the side wall has a recess in which the perimeter segment is housed.
- The side wall with the inlet opening has, on its outer face, a recess extending to the inlet opening, suitable for housing therein a stop arranged at the first end of the pin.

Another object of the invention is a wear assembly of an earth moving machine comprising a wear element according to the invention, specifically for the solution rendered to the aforementioned second block, and a pin according to the invention, where the fixing region coincides, in the direction of the longitudinal axis, with the inlet opening in the assembled position, where the riser of the step houses the free end of the flexible flange, thereby blocking the axial movement of the pin in the direction opposite the direction of insertion.

In general, it may be advantageous to assemble a plurality of retainers (preferably 2) stacked on top of one another. Greater mechanical resistance against the possibility of the retainer coming out (as if it was a retainer that is twice as thick) is thereby achieved, but without losing the elastic properties needed for the assembly to remain flexible and for allowing the insertion of the pin.

In general, it may be advantageous for the retainer to comprise a sheet of elastic material, preferably an elastomeric polymer material, arranged on the face oriented towards the inside of the cavity. This sheet of elastic material allows laterally stabilizing the fitting between the wear element and the nose, eliminating (or at least reducing) the play between both.

Another object of the invention is a wear assembly comprising a pin according to the invention and a retainer according to the invention. Any of both components (the pin and the retainer) can include any of the preferred embodiments described above. A further preferred embodiment is when, considering that the flange defines a flange axis as described before and the projection of the flange axis in a plane comprising the perimeter segment defines a flange direction, in said assembled position, the distance, in direction of the flange direction, between the free end and the pin is greater than the distance, in direction of the flange direction, between the pin and a contact point present in the perimeter segment, so that, in a relative movement between the pin and the retainer according to the flange direction, the pin contacts the contact point before contacting the free end. Preferably, in the assembled position, the perimeter segment and the pin are in contact through at least two pairs of blocking points, where one of the pair of blocking points blocks the relative movement between the retainer and the pin in one sense according to a direction in the plane comprising the perimeter segment and perpendicular to the flange direction, and the other pair of blocking points blocks the relative movement between the retainer and the pin in the opposite sense.

Another object of the invention is a use of a retainer for blocking a pin, the pin fixing a wear element in a support element of an earth moving machine, the wear element comprising a cavity where, in an assembled position in which the wear element is assembled on the support element, a nose present in the support element is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the through opening defines a longitudinal axis, the longitudinal axis having a direction of insertion corresponding to the direction in which the pin is introduced in the through opening to achieve the assembled position, where the retainer is formed from a sheet material comprising a perimeter segment, fixed to a perimeter region of the through opening or of the nose opening, and a flexible flange joined at one end to the perimeter segment and extending towards the through opening or the nose opening, where the free end of the flexible flange stays shifted forward, according to the direction of insertion, with respect to the perimeter segment. Preferably, the retainer is according to the invention.

Another object of the invention is a use of a pin according to the invention, for fixing a wear element in a support element of an earth moving machine, the wear element comprising a cavity where, in an assembled position in which the wear element is assembled on the support element, a nose present in the support element is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the through opening defines a longitudinal axis, the longitudinal axis having a direction of insertion corresponding to the direction in which the pin is introduced in the through opening to achieve the assembled position.

Another object of the invention is a use of a wear assembly comprising a pin according to the invention and a retainer suitable for blocking the pin, where the retainer is formed from a sheet material comprising a perimeter segment, suitable for being fixed to a perimeter region of the through opening or of the nose opening, and a flexible flange joined at one end to the perimeter segment and suitable for extending towards the through opening or the nose opening, where the free end of the flexible flange is suitable for staying shifted forward, according to the direction of insertion, with respect to the perimeter segment, for fixing a wear element in a support element of an earth moving machine, the wear element comprising a cavity where, in an assembled position in which the wear element is assembled on the support element, a nose present in the support element is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the through opening defines a longitudinal axis, the longitudinal axis having a direction of insertion corresponding to the direction in which the pin is introduced in the through opening to achieve the assembled position.

Lastly, another object of the invention is a method of disassembling a wear element of a support element of an earth moving machine, the wear element comprising a cavity where, in an assembled position in which the wear element is assembled on a support element, a nose present in the support element is housed in the cavity, where the cavity is demarcated by side walls with two openings arranged in two of the side walls opposite one another, which are aligned with one another and aligned, in the assembled position, with a through nose opening arranged in the nose, where the openings and the nose opening are housing therein a pin according to the invention, fixing the wear element in the nose in the assembled position, where the openings define a longitudinal axis, where the longitudinal axis has a direction of insertion corresponding to the direction in which the pin is introduced in the openings to achieve the assembled position, where the pin defines a longitudinal axis of the pin and has a first end with actuation means suitable for rotating the pin according to its longitudinal axis, and a second end, opposite the first end, where, in the assembled position, the first end is housed in one of the openings, referred to as inlet opening, which is a through opening, and the second end is housed in the other one of the openings, referred to as outlet opening, where:
[a] the wear element comprises a retainer fixed to the inner face of the side wall comprising the outlet opening, the retainer being formed from a sheet material comprising a perimeter segment, fixed to the inner face in a perimeter region of the outlet opening, and a flexible flange joined at one end to the perimeter segment and extending towards the outlet opening, where the free end of the flexible flange is inside the outlet opening,
   or
[b] the wear element comprises a retainer fixed to the inner face of the side wall comprising the inlet opening, the retainer being formed from a sheet material comprising a perimeter segment, fixed to the inner face in a perimeter region of the inlet opening, and a flexible flange joined at one end to the perimeter segment and extending towards the nose opening, where the free end of the flexible flange stays shifted forward, according to the direction of insertion, with respect to the perimeter segment,
   or
[c] the nose comprises a retainer which is formed from a sheet material comprising a perimeter segment, fixed to a perimeter region of the nose opening and a flexible flange joined at one end to the perimeter segment and extending towards the inside of the nose opening. Wherein
   [i] a step of rotating the pin along the longitudinal axis of the pin trough the actuation means present in the first end until the flange is faced to the unblocking segment,
   [ii] a step of extracting the pin from the through opening and the nose opening, and
   [iii] a step of extracting the wear element from the support.

In this method, preferably the perimeter segment extends forming a closed perimeter frame, where the flange extends towards the inside of the frame. Advantageously the retainer has two flanges, arranged in opposite regions of the closed perimeter frame, the flanges being joined to the closed perimeter frame and extending towards the inside of the closed perimeter frame, where the free ends of both flexible flanges are suitable for staying shifted forward, according to the direction of insertion, with respect to the closed perimeter frame. Preferably the retainer is according to the invention.

### Brief Description of the Drawings

Other advantages and features of the invention will become apparent from the following description in which preferred embodiments of the invention are described in a non-limiting manner in reference to the attached drawings. In the figures:
Figure 1 shows a perspective view of a first embodiment of a retainer according to the invention.
Figures 2, 3, and 4 show a perspective view, a plan view, and an elevational view, respectively, of a second embodiment of a retainer according to the invention.
Figures 5, 6, 7, and 8 show a perspective view, a front elevational view, a side elevational view, and a plan view of a first embodiment of a pin according to the invention.
Figures 9, 10, 11, and 12 show a front perspective view, a rear perspective view, an elevational view, and a plan view of a third embodiment of a retainer according to the invention.
Figure 13 shows a perspective view of a wear element and a retainer before being assembled.
Figure 14 shows a perspective view of the wear element and the retainer of Figure 13, assembled.
Figures 15, 16, 17, and 18 show a cross-section of a wear element with a retainer assembled on a nose of a support element and a pin, in 3 moments of the pin insertion step (Figures 15 to 17) and after the pin has been rotated 90° around its longitudinal axis during the pin extraction step for disassembling the wear element of the support element (Figure 18).
Figure 19 shows an exploded perspective view of a wear element, a support element, a pin, and a retainer.
Figure 20 shows a rear perspective view of the assembly of Figure 19, assembled.
Figure 21 shows a detailed view of the region of the outlet opening of the wear element.
Figure 22 shows a perspective view of a nose of a support element with a retainer assembled and a pin housed in its nose opening.
Figure 23 shows a rear perspective view of a wear element with two retainers assembled and two pins housed in both inlet openings.
Figure 24 shows a cross-section of a wear element with two retainers assembled on a nose of a support element and with the two corresponding pins.
Figure 25 shows an exploded perspective view of a retainer including a sheet of elastic material.
Figure 26 shows a view equivalent to Figure 18, but with the retainer of Figure 25.
Figure 27 shows a detailed view of the region of the retainer of Figure 26.
Figure 28 shows a rear perspective view of another wear element according to the invention.
Figure 29 shows another embodiment according to the invention of a retainer assembled on a pin.
Figure 30 shows a plan view of the embodiment of Figure 29.
Figure 31 shows a further embodiment according to the invention of a retainer assembled on a pin.
Figure 32 shows a plan view of the embodiment of Figure 31.
Figure 33 shows a partial longitudinal section of the assemblies of Figures 29 to 32.
Figures 34, 35 and 36 show three perspective views of another retainer according to the invention.
Figure 37 shows a rear perspective view of a further retainer according to the invention.
Figure 38 shows a partial longitudinal section of the retainer of Figure 37 assembled on a pin.
Figure 39 shows a partial longitudinal section of a pin according to the invention.
Figure 40 shows a partial longitudinal section of another pin according to the invention.

### Detailed Description of Embodiments of the Invention

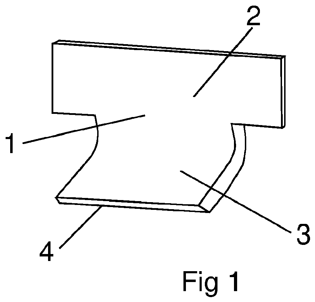

Figure 1 shows a retainer 1 according to the invention. It is formed from a sheet material, specifically a sheet of die-cut and bent metallic material, such that it comprises a perimeter segment 2 and a flexible flange 3 extending from the perimeter segment 2 and has the free end 4 thereof moved with respect to the perimeter segment 2.

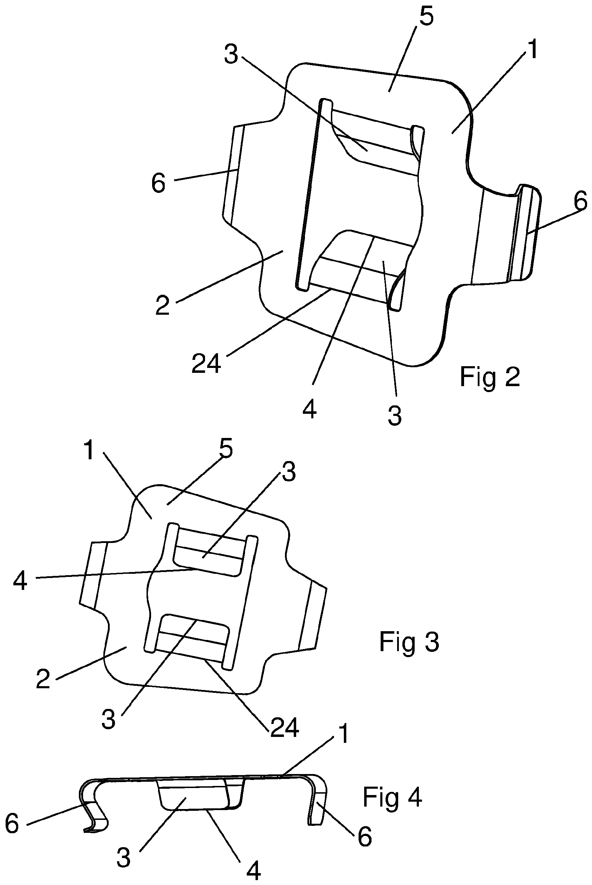

Figures 2 to 4 show another embodiment of a retainer 1 according to the invention. In this case, the perimeter segment 2 forms a closed perimeter frame 5 and has two flexible flanges 3, arranged in opposite regions of the closed perimeter frame 5, both extending towards the inside of the closed perimeter frame 5 and have the free end 4 thereof moved with respect to the closed perimeter frame 5. It also has first snap-fitting means 6 in the closed perimeter frame 5.

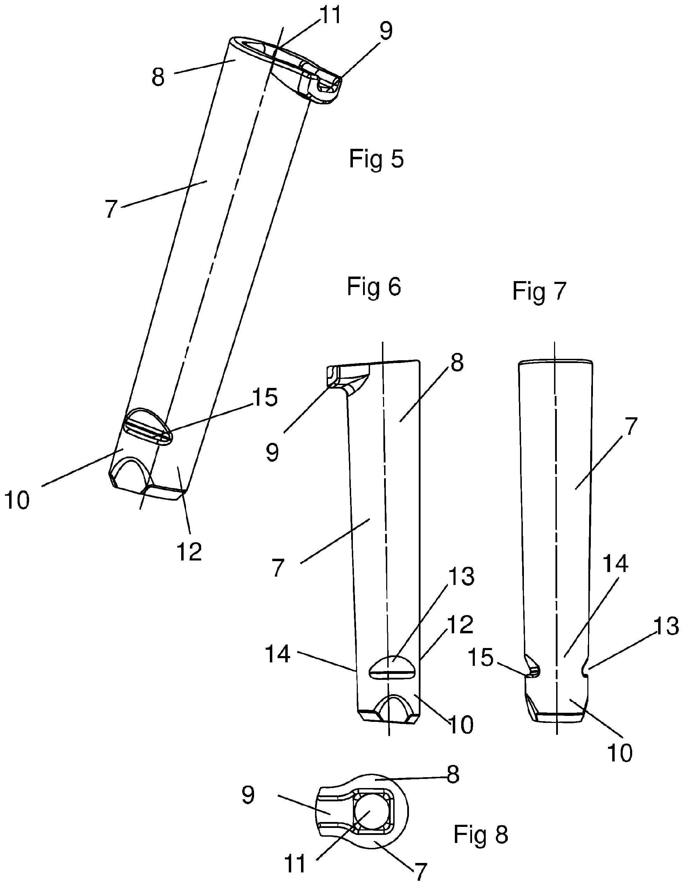

Figures 5 to 8 show a first embodiment of a pin 7 according to the invention. The pin 7 is substantially a slightly conical elongated cylinder with a first end 8 with a stop 9 and a second end 10. It also has at the first end 8 actuation means 11 consisting of an opening coaxial with the longitudinal axis of the pin 7 having a square cross-section. The pin 7 has a fixing region 12 close to the second end 10. The fixing region 12 has two blocking segments 13 and two unblocking segments 14. Each blocking segment 13 has a step, the riser 15 of which is oriented such that the outer surface of the riser 15 is facing the first end 8. The two unblocking segments 14 have a surface flush with the rest of the outer surface of the pin 7, in particular, with the riser oriented towards the first end 8, there is no discontinuity or step that may prevent or complicate the sliding of the free end 4 of the retainer 1 to the second end 10 of the pin 7.

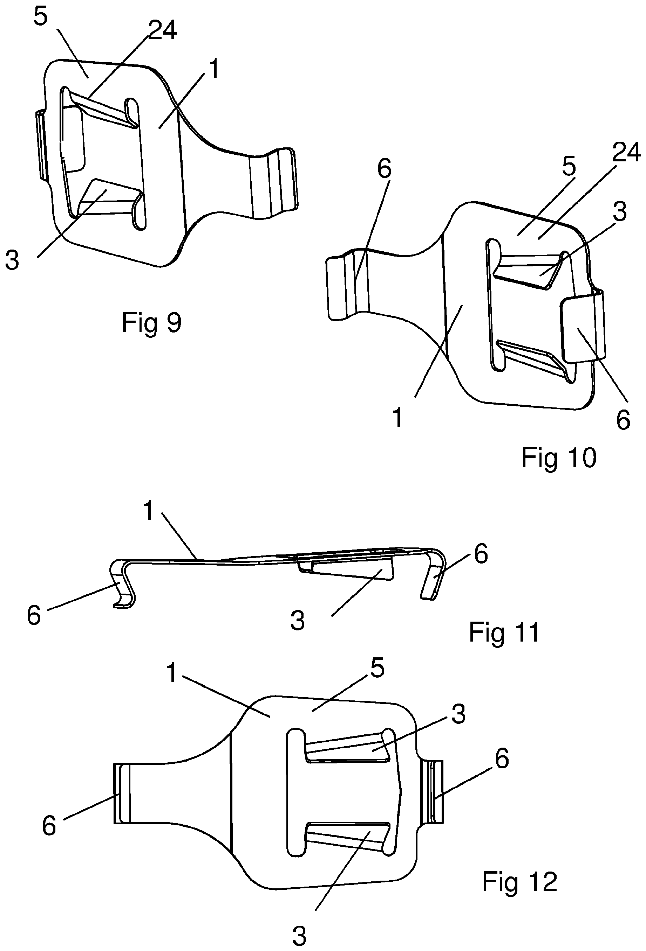

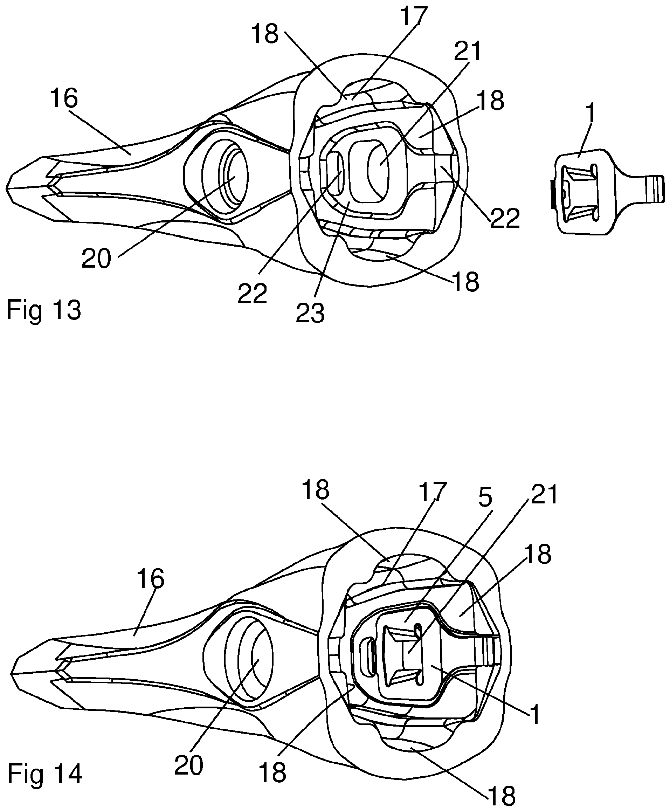

Figures 9 to 12 show another retainer 1, specifically one designed for being assembled in a wear element 16 (specifically a tooth) shown in Figures 13 and 14. The wear element 16 comprises a cavity 17 demarcated by side walls 18. This wear element 16 is designed for being fixed to a nose 19 by means of a single through pin 7 (alternative 1 mentioned above). Therefore, there are two openings in the side walls 18: an inlet opening 20 and an outlet opening 21 that are aligned with one another and, in this case, both being through openings. On the inner face of the side wall 18 having the outlet opening 21, there are second snap-fitting means 22 corresponding with the first snap-fitting means 6 of the retainer 1. This inner face also has a recess 23 in which the closed perimeter frame 5 of the retainer 1 is housed.

The side walls 18 are usually not parallel to one another and not perpendicular to the longitudinal axis of pin 7. Therefore, the perimeter segment 2 of retainer 1 will not be perpendicular to the longitudinal axis of the pin 7 either. However, it is advisable for the free end 4 of the flexible flange 3 to be perpendicular to the longitudinal axis of the pin 7. Therefore, the bending line 24 of the flexible flange 3 not being parallel to the free end 4 of the flexible flange 3 constitutes an advantage so as to compensate for the non-perpendicularity of the perimeter segment 2 with the longitudinal axis of the pin 7.

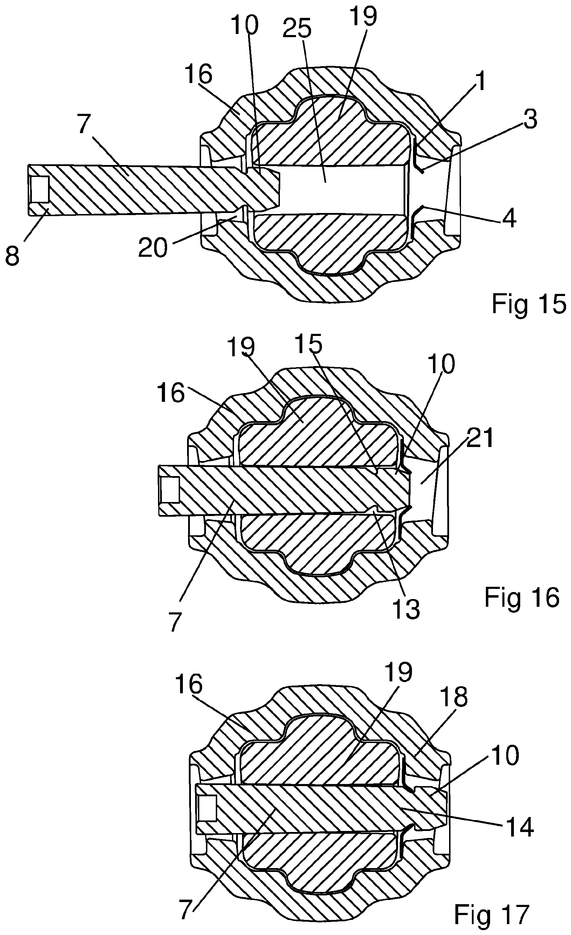

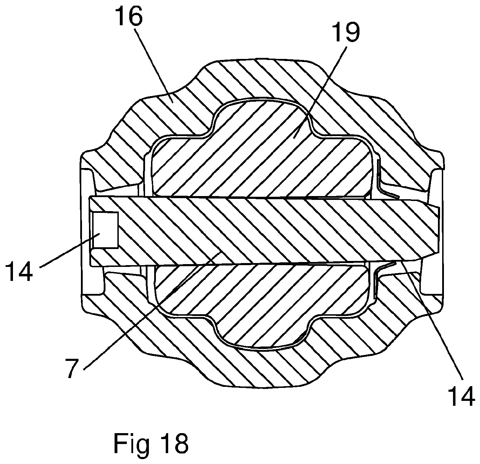

Figures 15 to 18 show a sequence of assembly in the case of the wear element 16 of Figures 13 and 14. The wear element 16 has the retainer 1 fixed on the inner face of the side wall 18 having the outlet opening 21. The wear element 16 is assembled on the nose 19 of a support element. In Figure 15, the pin 7 is in an insertion step. It is oriented angularly such that the steps will face the flexible flanges 3. Given that the retainer 1 is close to the outlet opening 21, the pin 7 can be introduced in the nose opening 25 without any force. In Figure 16, the pin 7 has already been introduced almost entirely, and the second end 10 abuts against the flexible flanges 3. From this moment, a certain force must be exerted to cause the elastic bending of the flexible flanges 3. In Figure 17, the pin 7 has already reached its assembled position, and the free ends 4 of the flexible flanges 3 have already reached the step of the respective blocking segments 13. From this moment, the pin 7 can no longer move backward because the free ends 4 abut against the risers 15 of the steps. To be able to remove the pin 7, it is sufficient to rotate it 90° around its longitudinal axis (Figure 18). In this manner, the free ends 4 come out of the respective steps and are positioned in the unblocking segments 14, where the surface of the pin 7 extends continuously (particularly, without any step which has riser oriented towards the first end 8). Therefore, there is no longer anything to prevent the extraction of the pin 7.

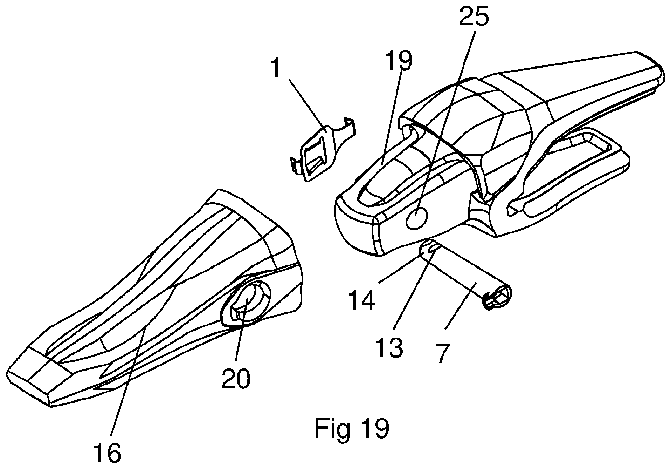

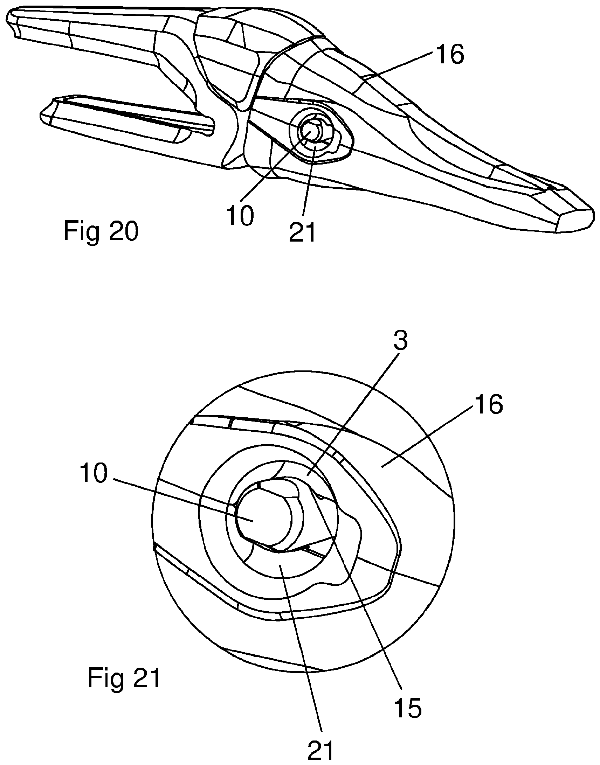

Figure 19 shows an exploded perspective view of the wear element 16 of Figures 13 to 18, of the retainer 1 of Figures 9 to 12, and of a support element (in this specific case, an adapter). Figure 20 shows the assembly of Figure 19 assembled, in which the outlet opening 21 can be seen, with the second end 10 of the pin 7 and the free end 4 of the flexible flanges 3 housed in the blocking segments 13, specifically abutting against the riser 15 of the steps.

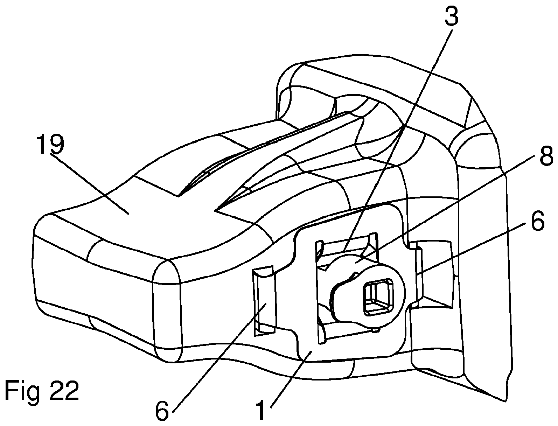

Figure 22 shows an embodiment corresponding with the case in which a pin 7, which is not a through pin, is used for fixing the wear element 16 in the nose 19, and specifically the case in which the retainer 1 is fixed to the nose 19. In order to be able to observe the positioning of the retainer 1, Figure 22 does not include the wear element 16. In this example, the fixing region 12 of the pin 7 is close to the first end 8 and is in the region which, in the assembled position, is in the inlet of the nose opening 25. The retainer 1 has first snap-fitting means 6 which are assembled on the second snap-fitting means 22 arranged around the nose opening 25.

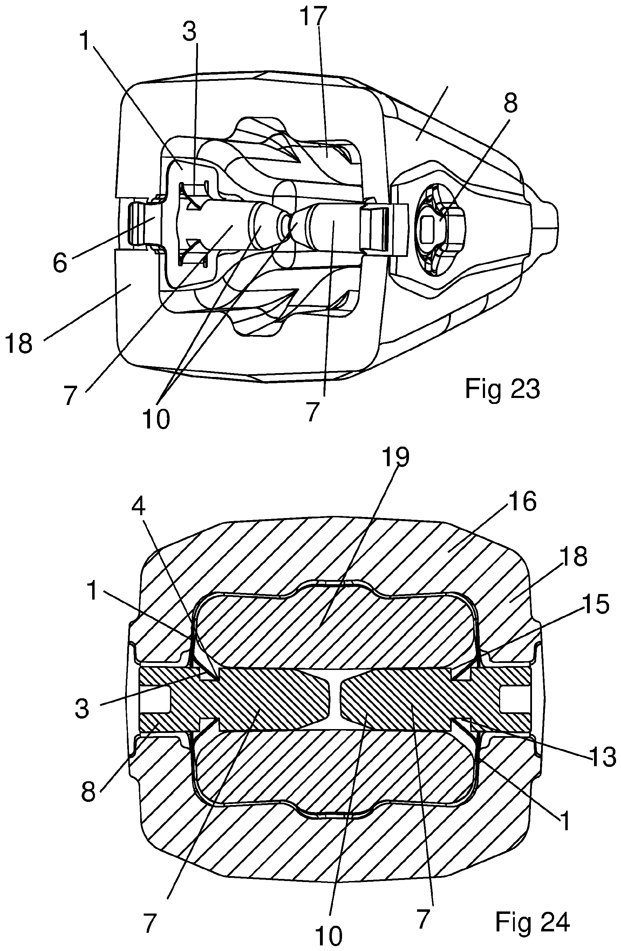

Figures 23 and 24 show an example in which two pins 7 are used for fixing the wear element 16 in the nose 19. In this case, the wear element 16 is an intermediate adapter which will be assembled on a nose 19 of a support element which, for example, can be welded to the lip of a shovel. In this case, the retainers 1 are fixed to the wear element 16. Figure 23 shows the assembled assembly but without the nose 19 so as to be able to observe the positioning of the retainers 1 on the inner faces of the side walls 18 of the wear element 16, whereas Figure 24 shows all the components (wear element 16, nose 19, two retainers 1, and two pins 7).

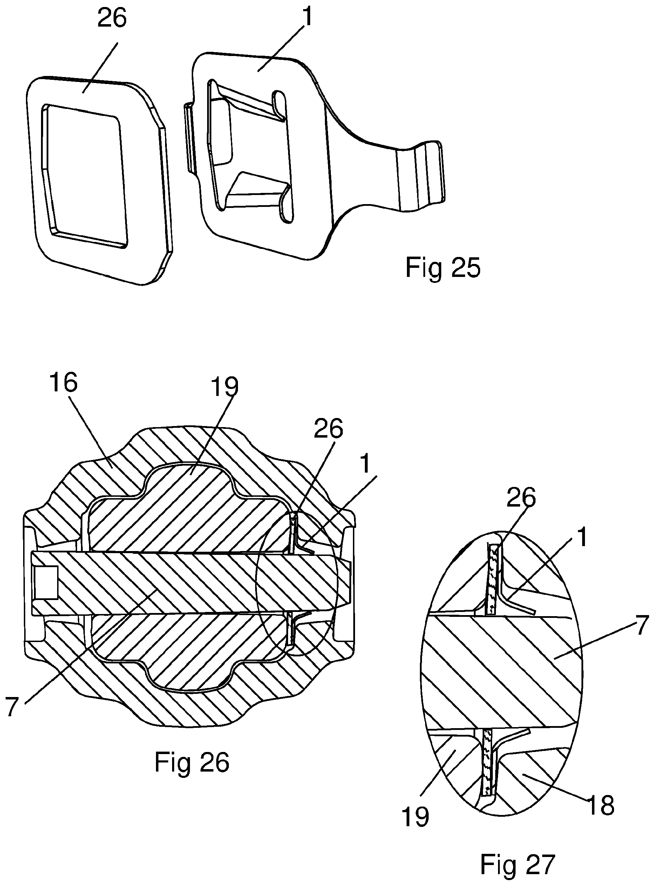

Figures 25 to 27 show an example in which the retainer 1 comprises a sheet of elastic material 26. In this example, the retainer 1 is fixed close to the outlet opening 21 of the wear element 16 and the sheet of elastic material 26 is between the retainer 1 and the nose 19.

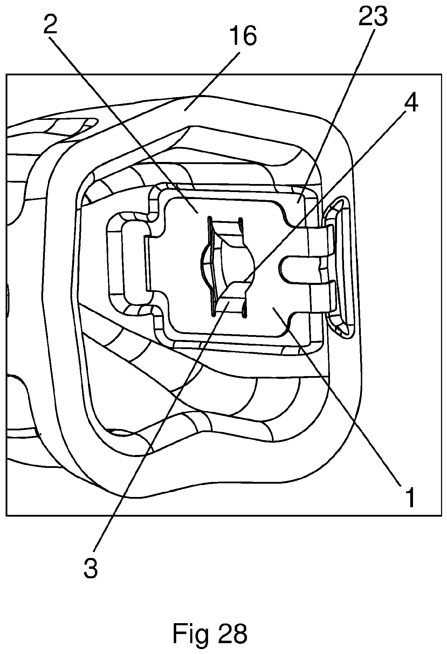

Figure 28 shows a wear element 16 with an assembled retainer 1. The inner face of the side wall has a recess 23 in which the perimeter segment 2 is housed. Specifically, the flange 3 defines a flange axis that extends from end through which the flange 3 is joined to the perimeter segment 2 to the free end 4. The projection of the flange axis in a plane comprising the perimeter segment 2 defines a flange direction. Additionally, the perimeter segment 2 has an outer perimeter segment edge and the recess 23 has a recess edge. There is a gap, in the flange direction, between the outer perimeter segment edge and the recess edge, so that the flange 3 is able to be moved according to the flange direction within the recess 23. Therefore, if during operation the free end 4 is compressed (due to direct contact with the pin 7 or due to accumulation of stones or fines in-between), the whole retainer 1 can move avoiding that the flange 3 is damaged.

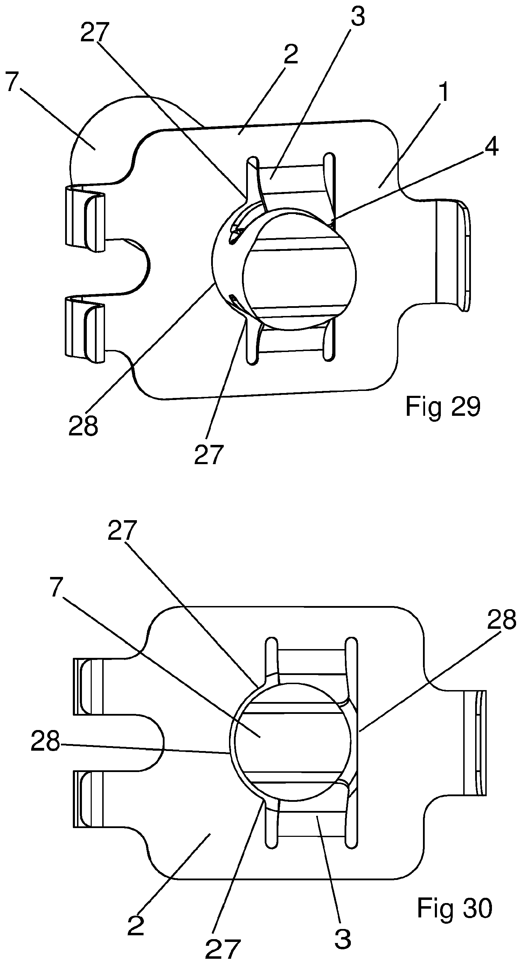

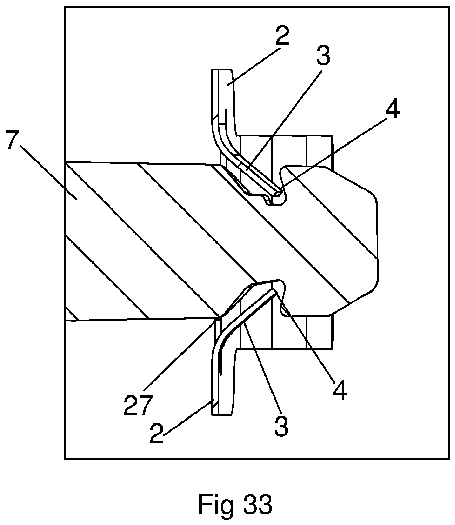

Figures 29 and 30 show a retainer 1 assembled to a pin. As before, the flange 3 defines a flange axis that extends from the end through which the flange 3 is joined to the perimeter segment 2 to the free end 4. The projection of the flange axis in a plane comprising the perimeter segment 2 defines a flange direction. In the assembled position, the distance, in direction of the flange direction, between the free end 4 and the pin 7 is greater than the distance, in direction of the flange direction, between the pin 7 and a contact point 27 present in the perimeter segment 2 (see also Figure 33), so that, in a relative movement between the pin 7 and the retainer 1 according to the flange direction, the pin 7 contacts the contact point 27 before contacting the free end 4. So, it can be avoided that, during operation, the free end 4 is impacted by the pin 7, as the pin 7 will contact the contact point 27 before. It is particularly advantageous to combine this preferred solution with the improvement shown in Figure 28.

Additionally, the perimeter segment 2 and the pin 7 are in contact through at least two pairs of blocking points 28, where one of the pair of blocking points 28 blocks the relative movement between the retainer 1 and the pin 7 in one sense according to a direction in the plane comprising the perimeter segment 2 and perpendicular to the flange direction, and the other pair of blocking points 28 blocks the relative movement between the retainer 1 and the pin 7 in the opposite sense. So, it is avoided that there is a relative movement between the free end 4 and the pin 7 according to this direction. Therefore, the flange 3 is protected against damages that this relative movement could provoke.

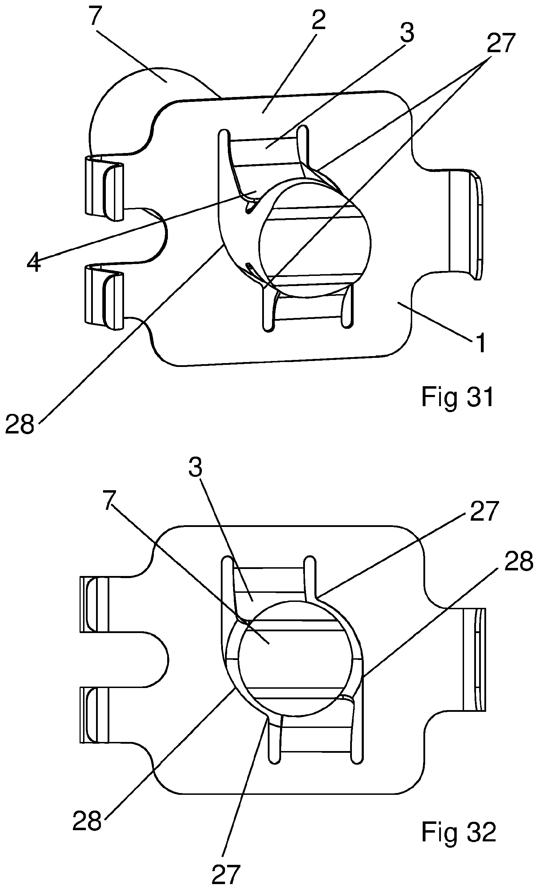

Figures 31 and 32 show a similar embodiment to the one of Figures 29 and 30. The explanations given above are applicable to the present embodiment.

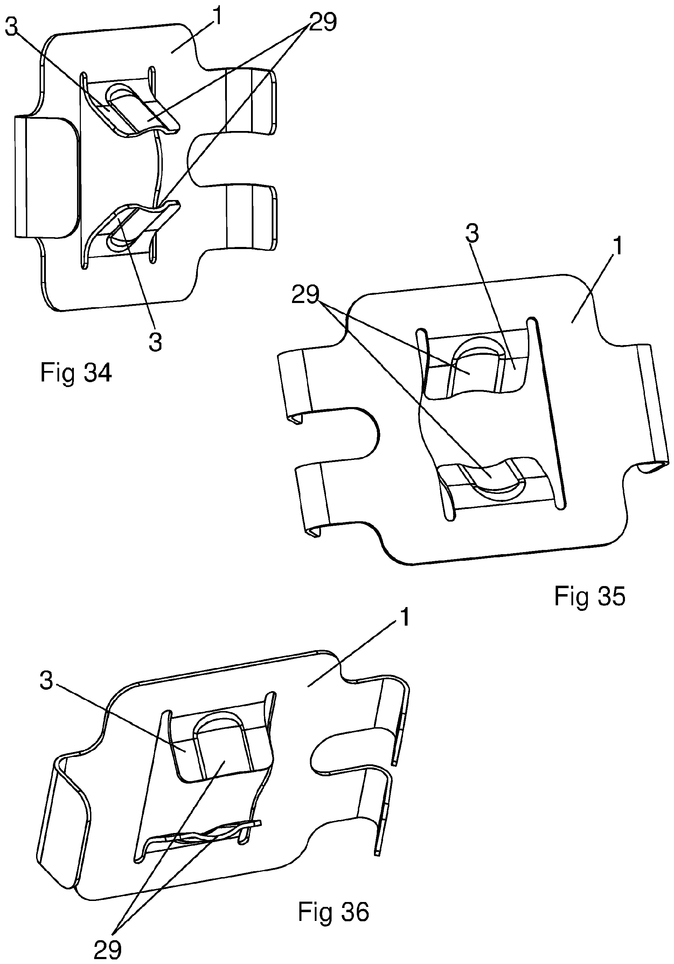

Figures 34 to 36 show an embodiment of a retainer 1 that has reinforcing means 29 in the flange 3. In the specific example shown in these Figures, the reinforcing means 29 is a reinforced region manufactured by deep drawing.

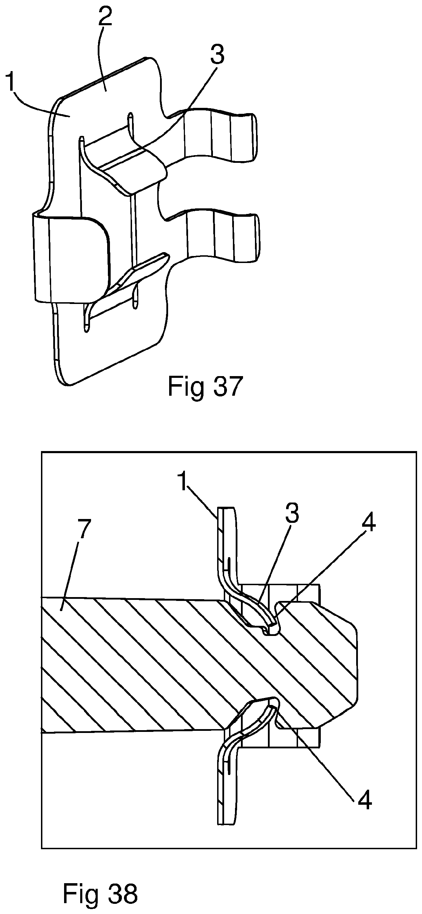

In Figures 37 and 38 the flange 3 defines a flange axis that extends from the end through which the flange 3 is joined to the perimeter segment 2 to the free end 4, as explained in previous cases. In the present embodiment, a section of the flange 3 with any plane parallel to the flange axis and perpendicular to a plane comprising the perimeter segment 2 (as the case shown in Figure 38) has a first zone, close to the end through which the flange 3 is joined to the perimeter segment 2, that has a curvature that is convex when seen from the plane comprising the perimeter segment 2, and has a second zone, close to the free end 4, that has a curvature that is concave when seen from the plane comprising the perimeter segment 2. This geometry avoids that, in the case of contact between the flange 3 and the pin 7, the flange is bent "upwards" (i.e., "escaping" from the step). On the contrary, the flange will be bent towards the inside of the blocking segment 13.

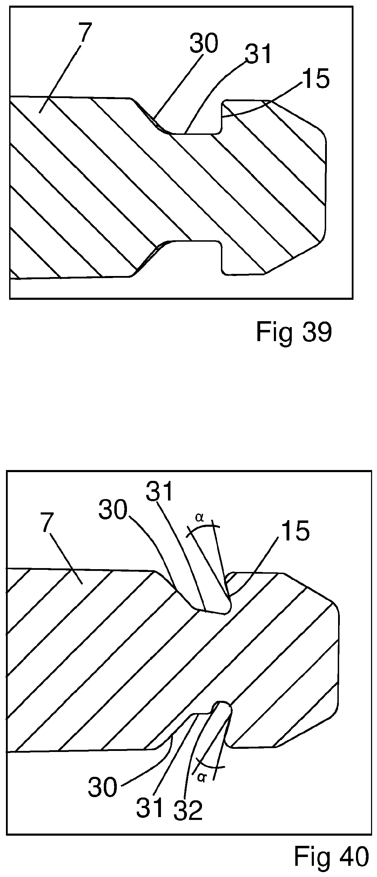

Figure 39 shows a preferred embodiment of a pin according to the invention. In general, the riser 15 has an upper end, more separated from the longitudinal axis of the pin 7 than a lower end of the riser 15. The blocking segment of this embodiment has a ramp 30, opposed to the riser 15 (i.e., closer to the first end 8 of the pin 7 than the riser 15), and a lower portion 31 extending from the lower end of the raiser 15 to a lower end of the ramp 30. In the present case, the lower portion 31 is parallel to the longitudinal axis of the pin 7.

Figure 40 shows, in fact, two different preferred embodiments: one in the upper part of the Figure and another in the lower part of the Figure. In the upper part of the Figure it can be seen a pin 7 in which the lower portion 31 is inclined towards the longitudinal axis of the pin 7 so that the lower portion 31 is closer to the longitudinal axis of the pin 7 at the lower end of the raiser 15 than at the lower end of the ramp 30. In the lower part of the Figure it can be seen a pin in which the lower portion 31 has a recessed portion 32, closer to the raiser 15 than to the ramp 30, for housing the free end 4 of the flange 3. Both alternatives reduce the risk that the flange is bent "upwards" (i.e., "escaping" from the step). In fact, Figures 33 and 38 show also these two alternatives.

Figure 40 shows another improvement which is, in fact, independent of the previous ones although it also reduces the risk that the flange is bent "upwards" (i.e., "escaping" from the step). The riser 15 of the step leans against the direction of insertion at an angle α greater than 0 degrees, so that an upper end of the riser 15, more separated from the longitudinal axis of the pin (7) than a lower end of the riser 15, is closer to the first end 8 of the pin than the lower end. Preferably the angle α is greater than 2 degrees and, more preferably, it is greater than 4 degrees.

## Claims

1. An earth moving machine comprising a support element with a nose (19) suitable for having a wear element (16) assembled thereon by means of a pin (7), said wear element (16) comprising a cavity (17) where, in an assembled position in which said wear element (16) is assembled on said support element, said nose (19) is housed in said cavity (17), where said cavity (17) is demarcated by side walls (18) with at least one through opening arranged in one of said side walls (18), where said nose (19) has a nose opening (25) which, in said assembled position, is aligned with said through opening of said wear element (16), where, in said assembled position said pin (7) is housed in said through opening and said nose opening (25), where said nose opening (25) defines a longitudinal axis, said longitudinal axis having a direction of insertion corresponding to the direction in which said pin (7) is introduced in said through opening to achieve said assembled position,
**characterized in that**:
it comprises a retainer (1) which is formed from a sheet material comprising a perimeter segment (2), fixed to a perimeter region of said nose opening (25) and a flexible flange (3) joined at one end to said perimeter segment (2) and extending towards the inside of said nose opening (25).

2. A wear element (16) of an earth moving machine, said wear element (16) comprising a cavity (17) where, in an assembled position in which said wear element (16) is assembled on a support element, a nose (19) present in said support element is housed in said cavity (17), where said cavity (17) is demarcated by side walls (18) with a through opening arranged in one of said side walls (18), which is aligned, in said assembled position, with a nose opening (25) arranged in said nose (19), where said through opening and said nose opening (25) are suitable for housing therein a pin (7) suitable for fixing said wear element (16) in said nose (19) in said assembled position, where said through opening defines a longitudinal axis, where said longitudinal axis has a direction of insertion corresponding to the direction in which said pin (7) is introduced in said through opening to achieve said assembled position, where said pin (7) defines a longitudinal axis of the pin (7) and has a first end (8) with actuation means (11) suitable for rotating the pin (7) according to its longitudinal axis, and a second end (10), opposite said first end (8), where, in said assembled position, said first end (8) is housed in said through opening, referred to as inlet opening (20), and said second end (10) is housed inside said nose opening (25),
**characterized in that**:
said wear element (16) comprises a retainer (1) fixed to the inner face of the side wall comprising said inlet opening (20), said retainer (1) being formed from a sheet material comprising a perimeter segment (2), fixed to said inner face in a perimeter region of said inlet opening (20), and a flexible flange (3) joined at one end to said perimeter segment (2) and extending towards said nose opening (25), where the free end (4) of the flexible flange (3) stays shifted forward, according to said direction of insertion, with respect to said perimeter segment (2).

3. A retainer (1) suitable for blocking a pin (7), said pin (7) being suitable for fixing a wear element (16) in a support element of an earth moving machine, said wear element (16) comprising a cavity (17) where, in an assembled position in which said wear element (16) is assembled on said support element, a nose (19) present in said support element is housed in said cavity (17), where said cavity (17) is demarcated by side walls (18) with at least one through opening arranged in one of said side walls (18), where said nose (19) has a nose opening (25) which, in said assembled position, is aligned with said through opening of said wear element (16), where, in said assembled position said pin (7) is housed in said through opening and said nose opening (25), where said through opening defines a longitudinal axis, said longitudinal axis having a direction of insertion corresponding to the direction in which said pin (7) is introduced in said through opening to achieve said assembled position, where said retainer (1) is formed from a sheet material comprising a perimeter segment (2), where said perimeter segment (2) extends forming a closed perimeter frame (5) and is suitable for being fixed to a perimeter region of said through opening or of said nose opening (25), and a flexible flange (3) joined at one end to said perimeter segment (2), where said flange (3) extends towards the inside of said frame (5) and is suitable for extending towards said through opening or said nose opening (25), where the free end (4) of the flexible flange (3) is suitable for staying shifted forward, according to said direction of insertion, with respect to said perimeter segment (2),
**characterized in that**
said perimeter segment (2) has first snap-fitting means (6) suitable for being assembled on second snap-fitting means (22) present in said perimeter region of said opening, thereby fixing said retainer (1) to said perimeter region in the direction of the longitudinal axis,
and **in that**
said retainer (1) has two flanges, arranged in opposite regions of said closed perimeter frame (5), said flanges being joined to said closed perimeter frame (5) and extending towards the inside of said closed perimeter frame (5), where the free ends (4) of both flexible flanges (3) are suitable for staying shifted forward, according to said direction of insertion, with respect to said closed perimeter frame (5).

4. The retainer (1) according to claim 3, **characterized in that** said flange (3) has reinforcing means (29).

5. The retainer according to claim 4, **characterized in that** said reinforcing means (29) is a reinforced region manufactured by deep drawing.

6. The retainer (1) according to any one of claims 3 to 5, **characterized in that** the flange (3) defines a flange axis that extends from said end through which the flange (3) is joined to said perimeter segment (2) to said free end (4), and **in that** a section of said flange (3) with any plane parallel to said flange axis and perpendicular to a plane comprising said perimeter segment (2) has a first zone, close to said end through which the flange (3) is joined to said perimeter segment (2), that has a curvature that is convex when seen from said plane comprising said perimeter segment (2), and has a second zone, close to said free end (4), that has a curvature that is concave when seen from said plane comprising said perimeter segment (2).

7. A pin (7) suitable for fixing a wear element (16) in a support element of an earth moving machine, said wear element (16) comprising a cavity (17) where, in an assembled position in which said wear element (16) is assembled on said support element, a nose (19) present in said support element is housed in said cavity (17), where said cavity (17) is demarcated by side walls (18) with at least one through opening arranged in one of said side walls (18), where said nose (19) has a nose opening (25) which, in said assembled position, is aligned with said through opening of said wear element (16), where, in said assembled position said pin (7) is housed in said through opening and said nose opening (25), where said through opening defines a longitudinal axis, said longitudinal axis having a direction of insertion corresponding to the direction in which said pin (7) is introduced in said through opening to achieve said assembled position, where said pin (7) defines a longitudinal axis of the pin (7) and has a first end (8) with actuation means (11) suitable for rotating the pin (7) according to its longitudinal axis, and a second end (10), opposite said first end (8),
**characterized in that**:
said pin (7) has a fixing region (12), where said fixing region (12) coincides, in the direction of said longitudinal axis, with said through opening or with the beginning of said nose opening (25) in said assembled position, where said fixing region (12) has a blocking segment having a step, where the riser (15) of said step is oriented towards said first end (8) and is suitable for housing the free end (4) of a flexible flange (3) of a retainer (1), when said retainer (1) is formed from a sheet material comprising a perimeter segment (2) and said flexible flange (3) joined at one end to said perimeter segment (2), said perimeter segment (2) being fixed to a perimeter region of said through opening or of said nose opening (25), and said flexible flange (3) extending towards said through opening or said nose opening (25), where the free end (4) of said flexible flange (3) stays shifted forward, according to said direction of insertion, with respect to said perimeter segment (2), thereby blocking the axial movement of the pin (7) in the direction opposite the direction of insertion, said fixing region (12) also comprising an unblocking segment (14) arranged at the same distance as said blocking segment, in the direction of said longitudinal axis of the pin (7), with respect to said first end (8), said unblocking segment (14) being displaced angularly, according to a rotation of said longitudinal axis of the pin (7), with respect to said blocking segment, where said unblocking segment (14) does not have said step but rather has a smooth segment, in which the side surface of the pin (7) extends continuously to the end of the second end (10)
and **in that** said actuation means comprise an opening coaxial with the longitudinal axis of the pin and arranged at the first end, where the opening has a non-circular cross-section.

8. The pin (7) according to claim 7, **characterized in that** said fixing region (12) has two blocking segments (13) arranged at the same distance, in the direction of said longitudinal axis of the pin (7), with respect to said first end (8) and arranged on circumferentially opposite sides, where each blocking segment (13) has a step, where the riser (15) of each step is oriented towards said first end (8) and is suitable for housing the free end (4) of one of the flexible flanges (3) of a retainer (1), when said retainer (1) has a perimeter segment (2) that extends forming a closed perimeter frame (5) and two flanges arranged in opposite regions of said closed perimeter frame (5), said flanges being joined to said closed perimeter frame (5) and extending towards the inside of said closed perimeter frame (5), said closed perimeter frame (5) being fixed to a perimeter region of said through opening or of said nose opening (25), where the free ends (4) of both flexible flanges (3) are suitable for staying shifted forward, according to said direction of insertion, with respect to said closed perimeter frame (5), thereby blocking the axial movement of the second end (10) in the direction opposite said direction of insertion, said fixing region (12) also comprising two unblocking segments (14) arranged at the same distance as said blocking segments (13), in the direction of said longitudinal axis of the pin (7), with respect to said first end (8), said unblocking segments (14) being displaced angularly, according to a rotation of said longitudinal axis of the pin (7), with respect to said blocking segments (13), where said unblocking segments (14) do not have said step but rather have a smooth segment, in which the side surface of the pin (7) extends continuously to the end of the second end (10).

9. The pin (7) according to one of claims 7 or 8, **characterized in that** said fixing region (12) is close to said second end (10).

10. The pin (7) according to any one of claims 7 to 9, **characterized in that** said riser (15) of said step leans against said direction of insertion at an angle greater than 0 degrees, so that an upper end of said riser (15), more separated from said longitudinal axis of the pin (7) than a lower end of said riser (15), is closer to said first end (8) of the pin than said lower end.

11. The pin (7) according to any one of claims 7 to 10, **characterized in that** said riser (15) has an upper end, more separated from said longitudinal axis of the pin (7) than a lower end of said riser (15), and said blocking segment has a ramp (30), opposed to said riser (15), and a lower portion (31) extending from said lower end of the raiser (15) to a lower end of said ramp (30).

12. The pin according to claim 11, **characterized in that** said lower portion (31) is inclined towards said longitudinal axis of the pin (7) so that said lower portion (31) is closer to said longitudinal axis of the pin (7) at said lower end of the raiser (15) than at said lower end of said ramp (30).

13. The pin (7) according to any one of claims 11 or 12, **characterized in that** said lower portion (31) has a recessed portion (32), closer to said raiser (15) than to said ramp (30), for housing said free end (4) of said flange (3).

14. A wear element (16) of an earth moving machine, said wear element (16) comprising a cavity (17) where, in an assembled position in which said wear element (16) is assembled on a support element, a nose (19) present in said support element is housed in said cavity (17), where said cavity (17) is demarcated by side walls (18) with two openings arranged in two of said side walls (18) opposite one another, which are aligned with one another and aligned, in said assembled position, with a through nose opening (25) arranged in said nose (19), where said openings and said nose opening (25) are suitable for housing therein a pin (7) suitable for fixing said wear element (16) in said nose (19) in said assembled position, where said openings define a longitudinal axis, where said longitudinal axis has a direction of insertion corresponding to the direction in which said pin (7) is introduced in said openings to achieve said assembled position, where said pin (7) defines a longitudinal axis of the pin (7) and has a first end (8) with actuation means (11) suitable for rotating the pin (7) according to its longitudinal axis, and a second end (10), opposite said first end (8), where, in said assembled position, said first end (8) is housed in one of said openings, referred to as inlet opening (20), which is a through opening, and said second end (10) is housed in the other one of said openings, referred to as outlet opening (21),
**characterized in that**:
said wear element (16) comprises a retainer (1) fixed to the inner face of the side wall comprising said outlet opening (21), said retainer (1) being formed from a sheet material comprising a perimeter segment (2), fixed to said inner face in a perimeter region of said outlet opening (21), and a flexible flange (3) joined at one end to said perimeter segment (2) and extending towards said outlet opening (21), where the free end (4) of said flexible flange (3) is inside said outlet opening (21).

## Patentansprüche

1. Eine Erdbewegungsmaschine, die ein Tragelement mit einer Nase (19) aufweist, die dafür geeignet ist, dass an ihr ein Verschleißelement (16) mit Hilfe eines Stifts (7) montiert ist, wobei das besagte Verschleißelement (16) einen Hohlraum (17) aufweist, wobei in einer zusammengebauten Position, in der das besagte Verschleißelement (16) an dem besagten Tragelement montiert ist, die besagte Nase (19) in dem besagten Hohlraum (17) untergebracht ist, wobei der besagte Hohlraum (17) durch Seitenwände (18) abgegrenzt ist, wobei mindestens eine Durchgangsöffnung in einer der besagten Seitenwände (18) angeordnet ist, wobei die besagte Nase (19) eine Nasenöffnung (25) aufweist, die in der besagten zusammengebauten Position mit der besagten Durchgangsöffnung des besagten Verschleißelements (16) auf einer Linie liegt, wobei in der besagten zusammengebauten Position der besagte Stift (7) in der besagten Durchgangsöffnung und der besagten Nasenöffnung (25) untergebracht ist, wobei die besagte Nasenöffnung (25) eine Längsachse definiert, wobei die besagte Längsachse eine Einführ-Richtung aufweist, die der Richtung entspricht, in der der besagte Stift (7) in die besagte Durchgangsöffnung eingeführt wird, um die besagte zusammengebaute Position zu erreichen,
**dadurch gekennzeichnet, dass**:
sie eine Halterung (1) aufweist, die aus einem Blatt-Material gebildet ist, das ein Rand-Segment (2) aufweist, das an einem Rand-Bereich der besagten Nasenöffnung (25) befestigt ist, und das einen flexiblen Flansch (3) aufweist, der an einem Ende mit dem besagten Rand-Segment (2) verbunden ist und sich in die Richtung der Innenseite der besagten Nasenöffnung (25) erstreckt.

2. Ein Verschleißelement (16) einer Erdbewegungsmaschine, wobei das besagte Verschleißelement (16) einen Hohlraum (17) aufweist, wobei in einer zusammengebauten Position, in der das besagte Verschleißelement (16) an einem Tragelement montiert ist, eine Nase (19), die in dem besagten Tragelement vorhanden ist, in dem besagten Hohlraum (17) untergebracht ist, wobei der besagte Hohlraum (17) durch Seitenwände (18) abgegrenzt ist, wobei in einer der besagten Seitenwände (18) eine Durchgangsöffnung angeordnet ist, die in der besagten zusammengebauten Position mit einer Nasenöffnung (25), die in der besagten Nase (19) angeordnet ist, auf einer Linie liegt, wobei die besagte Durchgangsöffnung und die besagte Nasenöffnung (25) dafür geeignet sind, dass sie in sich einen Stift (7) aufnehmen, der dafür geeignet ist, dass er das besagte Verschleißelement (16) in der besagten Nase (19) in der besagten zusammengebauten Position festlegt, wobei die besagte Durchgangsöffnung eine Längsachse definiert, wobei die besagte Längsachse eine Einführ-Richtung aufweist, die der Richtung entspricht, in der der besagte Stift (7) in die besagte Durchgangsöffnung eingeführt wird, um die besagte zusammengebaute Position zu erreichen, wobei der besagte Stift (7) eine Längsachse des Stifts (7) definiert und ein erstes Ende (8) mit Betätigungsmitteln (11), die dafür geeignet sind, dass sie den Stift (7) gemäß seiner Längsachse drehen, und ein zweites Ende (10) aufweist, das dem besagten ersten Ende (8) gegenüber liegt, wobei in der besagten zusammengebauten Position das besagte erste Ende (8) in der besagten Durchgangsöffnung, die als Einlassöffnung (20) bezeichnet wird, untergebracht ist und das besagte zweite Ende (10) im Inneren der besagten Nasenöffnung (25) untergebracht ist,
**dadurch gekennzeichnet, dass**:
das besagte Verschleißelement (16) eine Halterung (1) aufweist, die an der inneren Fläche der Seitenwand, die die besagte Einlassöffnung (20) aufweist, befestigt ist, wobei die besagte Halterung (1) aus einem Blatt-Material gebildet ist, das ein Rand-Segment (2) aufweist, das an der besagten inneren Fläche in einem Umfangsbereich der besagten Einlassöffnung (20) befestigt ist, und das einen flexiblen Flansch (3) aufweist, der an einem Ende mit dem besagten Rand-Segment (2) verbunden ist und sich in die Richtung der besagten Nasenöffnung (25) erstreckt, wobei das freie Ende (4) des flexiblen Flansches (3) in Bezug auf das besagte Rand-Segment (2) nach vorn, gemäß der besagten Einführ-Richtung, versetzt bleibt.

3. Eine Halterung (1), die dafür geeignet ist, dass sie einen Stift (7) blockiert, wobei der besagte Stift (7) dafür geeignet ist, dass er ein Verschleißelement (16) in einem Tragelement einer Erdbewegungsmaschine festlegt, wobei das besagte Verschleißelement (16) einen Hohlraum (17) aufweist, wobei in einer zusammengebauten Position, in der das besagte Verschleißelement (16) an dem besagten Tragelement montiert ist, eine Nase (19), die in dem besagten Tragelement vorhanden ist, in dem besagten Hohlraum (17) untergebracht ist, wobei der besagte Hohlraum (17) durch Seitenwände (18) abgegrenzt ist, wobei in einer der besagten Seitenwände (18) mindestens eine Durchgangsöffnung angeordnet ist, wobei die besagte Nase (19) eine Nasenöffnung (25) aufweist, die in der besagten zusammengebauten Position mit der besagten Durchgangsöffnung des besagten Verschleißelements (16) auf einer Linie liegt, wobei in der besagten zusammengebauten Position der besagte Stift (7) in der besagten Durchgangsöffnung und der besagten Nasenöffnung (25) untergebracht ist, wobei die besagte Durchgangsöffnung eine Längsachse definiert, wobei die besagte Längsachse eine Einführ-Richtung aufweist, die der Richtung entspricht, in der der besagte Stift (7) in die besagte Durchgangsöffnung eingeführt wird, um die besagte zusammengebaute Position zu erreichen, wobei die besagte Halterung (1) aus einem Blatt-Material gebildet ist, das ein Rand-Segment (2) aufweist, wobei sich das besagte Rand-Segment (2) in einer solchen Weise erstreckt, dass es einen geschlossenen Rand-Rahmen (5) bildet, und es dafür geeignet ist, dass es an einem Rand-Bereich der besagten Durchgangsöffnung oder der besagten Nasenöffnung (25) festgelegt wird, und das einen flexiblen Flansch (3) aufweist, der an einem Ende mit dem besagten Rand-Segment (2) verbunden ist, wobei der Flansch (3) sich in die Richtung des Inneren des besagten Rahmens (5) erstreckt und dafür geeignet ist, dass er sich in die Richtung der besagten Durchgangsöffnung oder der besagten Nasenöffnung (25) erstreckt, wobei das freie Ende (4) des flexiblen Flansches (3) dafür geeignet ist, dass es in Bezug auf das besagte Rand-Segment (2) nach vorn, gemäß der besagten Einführ-Richtung, versetzt bleibt,
**dadurch gekennzeichnet, dass**
das besagte Rand-Segment (2) erste Einrast-Mittel (6) aufweist, die dafür geeignet sind, dass sie an zweiten Einrast-Mitteln (22) montiert werden, die in dem besagten Rand-Bereich der besagten Öffnung vorhanden sind, wodurch die besagte Halterung (1) an dem besagten Rand-Bereich in der Richtung der Längsachse festgelegt wird, und dadurch, dass
die besagte Halterung (1) zwei Flansche aufweist, die in einander gegenüber liegenden Bereichen des besagten geschlossenen Rand-Rahmens (5) angeordnet sind, wobei die besagten Flansche mit dem besagten geschlossenen Rand-Rahmen (5) verbunden sind und sich in die Richtung des Inneren des besagten geschlossenen Rand-Rahmens (5) erstrecken, wobei die freien Enden (4) der beiden flexiblen Flansche (3) dafür geeignet sind, dass sie in Bezug auf den besagten geschlossenen Rand-Rahmen (5) nach vorn, gemäß der besagten Einführ-Richtung, versetzt bleiben.

4. Die Halterung (1) gemäß dem Anspruch 3, **dadurch gekennzeichnet, dass** der besagte Flansch (3) Verstärkungsmittel (29) aufweist.

5. Die Halterung gemäß dem Anspruch 4, **dadurch gekennzeichnet, dass** das besagte Verstärkungsmittel (29) ein verstärkter Bereich ist, der durch Tiefziehen hergestellt ist.

6. Die Halterung (1) gemäß irgend einem der Ansprüche 3 bis 5, **dadurch gekennzeichnet, dass** der Flansch (3) eine Flanschachse definiert, die sich ausgehend von dem besagten Ende, durch das der Flansch (3) mit dem besagten Rand-Segment (2) verbunden ist, bis zu dem besagten freien Ende (4) erstreckt, und dadurch, dass ein Querschnitt des besagten Flansches (3) mit einer beliebigen Ebene, die parallel zu der besagten Flanschachse und rechtwinklig zu einer Ebene, die das besagte Rand-Segment (2) aufweist, verläuft, eine erste Zone aufweist, die sich in der Nähe des besagten Endes, durch das der Flansch (3) mit dem besagten Rand-Segment (2) verbunden ist, befindet und die eine Krümmung aufweist, die konvex ist, wenn sie von der besagten Ebene, die das besagte Rand-Segment (2) aufweist, aus betrachtet wird, und eine zweite Zone aufweist, die sich in der Nähe des besagten freien Endes (4) befindet und die eine Krümmung aufweist, die konkav ist, wenn sie von der besagten Ebene, die das besagte Rand-Segment (2) aufweist, aus betrachtet wird.

7. Ein Stift (7), der dafür geeignet ist, dass er ein Verschleißelement (16) in einem Tragelement einer Erdbewegungsmaschine festlegt, wobei das besagte Verschleißelement (16) einen Hohlraum (17) aufweist, wobei in einer zusammengebauten Position, in der das besagte Verschleißelement (16) an dem besagten Tragelement montiert ist, eine Nase (19), die in dem besagten Tragelement vorhanden ist, in dem besagten Hohlraum (17) untergebracht ist, wobei der besagte Hohlraum (17) durch Seitenwände (18) abgegrenzt ist, wobei in einer der besagten Seitenwände (18) mindestens eine Durchgangsöffnung angeordnet ist, wobei die besagte Nase (19) eine Nasenöffnung (25) aufweist, die in der besagten zusammengebauten Position mit der besagten Durchgangsöffnung des besagten Verschleißelements (16) auf einer Linie liegt, wobei in der besagten zusammengebauten Position der besagte Stift (7) in der besagten Durchgangsöffnung und der besagten Nasenöffnung (25) untergebracht ist, wobei die besagte Durchgangsöffnung eine Längsachse definiert, wobei die besagte Längsachse eine Einführ-Richtung aufweist, die der Richtung entspricht, in der der besagte Stift (7) in die besagte Durchgangsöffnung eingeführt wird, um die besagte zusammengebaute Position zu erreichen, wobei der besagte Stift (7) eine Längsachse des Stifts (7) definiert und ein erstes Ende (8) mit Betätigungsmitteln (11), die dafür geeignet sind, dass sie den Stift (7) gemäß seiner Längsachse drehen, und ein zweites Ende (10) aufweist, das dem besagten ersten Ende (8) gegenüber liegt,
**dadurch gekennzeichnet, dass**:
der besagte Stift (7) einen Fixier-Bereich (12) aufweist, wobei der besagte Fixier-Bereich (12) in der Richtung der besagten Längsachse mit der besagten Durchgangsöffnung oder mit dem Anfang der besagten Nasenöffnung (25) in der besagten zusammengebauten Position zusammenfällt, wobei der besagte Fixier-Bereich (12) ein Blockier-Segment, das eine Stufe aufweist, aufweist, wobei die Setzstufe (15) der besagten Stufe in die Richtung des besagten ersten Endes (8) ausgerichtet ist und dafür geeignet ist, dass sie das freie Ende (4) eines flexiblen Flansches (3) einer Halterung (1) aufnimmt, wobei die besagte Halterung (1) aus einem Blatt-Material gebildet ist, das ein Rand-Segment (2) und den besagten flexiblen Flansch (3) aufweist, der an einem Ende mit dem besagten Rand-Segment (2) verbunden ist, wobei das besagte Rand-Segment (2) an einem Rand-Bereich der besagten Durchgangsöffnung oder der besagten Nasenöffnung (25) befestigt ist, und wobei sich der besagte flexible Flansch (3) in die Richtung der besagten Durchgangsöffnung oder der besagten Nasenöffnung (25) erstreckt, wobei das freie Ende (4) des flexiblen Flansches (3) in Bezug auf das besagte Rand-Segment (2) nach vorn, gemäß der besagten Einführ-Richtung, versetzt bleibt, wodurch die axiale Bewegung des Stifts (7) in jener Richtung blockiert wird, die der Einführ-Richtung entgegengesetzt ist, wobei der besagte Fixier-Bereich (12) auch ein Entblockier-Segment (14) umfasst, das in derselben Distanz wie das besagte Blockier-Segment, bezogen auf die Richtung der besagten Längsachse des Stifts (7), in Bezug auf das besagte erste Ende (8) angeordnet ist, wobei das besagte Entblockier-Segment (14) gemäß einer Drehung der besagten Längsachse des Stifts (7) in Bezug auf das besagte Blockier-Segment winkelmäßig versetzt ist, wobei das Entblockier-Segment (14) nicht die besagte Stufe aufweist, sondern vielmehr ein glattes Segment, in dem sich die Seitenfläche des Stifts (7) kontinuierlich bis zu dem Ende des zweiten Endes (10) hin erstreckt,
und dadurch, dass die besagten Betätigungsmittel eine Öffnung aufweisen, die koaxial mit der Längsachse des Stifts ist und an dem ersten Ende angeordnet ist, wobei die Öffnung einen nicht-kreisförmigen Querschnitt aufweist.

8. Der Stift (7) gemäß dem Anspruch 7, **dadurch gekennzeichnet, dass** der besagte Fixier-Bereich (12) zwei Blockier-Segmente (13) aufweist, die in der gleichen Distanz, bezogen auf die Richtung der besagten Längsachse des Stifts (7), in Bezug auf das besagte erste Ende (8) angeordnet sind und die auf in der Umfangsrichtung einander gegenüber liegenden Seiten angeordnet sind, wobei jedes Blockier-Segment (13) eine Stufe aufweist, wobei die Setzstufe (15) einer jeden Stufe in die Richtung des ersten Endes (8) ausgerichtet ist und dafür geeignet ist, dass sie das freie Ende (4) von einem der flexiblen Flansche (3) einer Halterung (1) aufnimmt, wobei die besagte Halterung (1) ein Rand-Segment (2), das sich in einer solchen Weise erstreckt, dass es einen geschlossenen Rand-Rahmen (5) bildet, sowie zwei Flansche aufweist, die in einander gegenüber liegenden Bereichen des besagten geschlossenen Rand-Rahmens (5) angeordnet sind, wobei die Flansche mit dem besagten geschlossenen Rand-Rahmen (5) verbunden sind und sich in die Richtung des Inneren des besagten geschlossenen Rand-Rahmens (5) erstrecken, wobei der geschlossene Rand-Rahmen (5) an einem Rand-Bereich der besagten Durchgangsöffnung oder der besagten Nasenöffnung (25) befestigt ist, wobei die freien Enden (4) der beiden flexiblen Flansche (3) dafür geeignet sind, dass sie in Bezug auf den besagten geschlossenen Rand-Rahmen (5) nach vorn, gemäß der besagten Einführ-Richtung, versetzt bleiben, wodurch die axiale Bewegung des zweiten Endes (10) in jener Richtung blockiert wird, die der besagten Einführ-Richtung entgegengesetzt ist, wobei der besagte Fixier-Bereich (12) auch zwei Entblockier-Segmente (14) aufweist, die in der gleichen Distanz wie die besagten Blockier-Segmente (13), bezogen auf die Richtung der besagten Längsachse des Stifts (7), in Bezug auf das besagte erste Ende (8) angeordnet sind, wobei die besagten Entblockier-Segmente (14) gemäß einer Drehung der besagten Längsachse des Stifts (7) in Bezug auf die besagten Blockier-Segmente (13) winkelmäßig versetzt sind, wobei die besagten Entblockier-Segmente (14) nicht die besagte Stufe aufweisen, sondern vielmehr ein glattes Segment, in dem sich die Seitenfläche des Stifts (7) kontinuierlich bis zu dem Ende des zweiten Endes (10) hin erstreckt.

9. Der Stift (7) gemäß einem der Ansprüche 7 oder 8, **dadurch gekennzeichnet, dass** der besagte Fixier-Bereich (12) sich in der Nähe des zweiten Endes (10) befindet.

10. Der Stift (7) gemäß irgend einem der Ansprüche 7 oder 9, **dadurch gekennzeichnet, dass** sich die besagte Setzstufe (15) der besagten Stufe in einem Winkel von mehr als 0 Grad gegen die besagte Einführ-Richtung neigt, so dass ein oberes Ende der besagten Setzstufe (15), das von der besagten Längsachse des Stifts (7) weiter entfernt ist als ein unteres Ende der besagten Setzstufe (15), sich näher an dem besagten ersten Ende (8) des Stifts befindet als das besagte untere Ende.

11. Der Stift (7) gemäß irgend einem der Ansprüche 7 oder 10, **dadurch gekennzeichnet, dass** die besagte Setzstufe (15) ein oberes Ende aufweist, das von der besagten Längsachse des Bolzens (7) weiter entfernt ist als ein unteres Ende der besagten Setzstufe (15), und dass das besagte Blockier-Segment eine Rampe (30) aufweist, die der besagten Setzstufe (15) gegenüber liegt, und einen unteren Teil (31) aufweist, der sich ausgehend von dem besagten unteren Ende der Setzstufe (15) bis zu einem unteren Ende der besagten Rampe (30) erstreckt.

12. Der Stift (7) gemäß dem Anspruch 11, **dadurch gekennzeichnet, dass** der besagte untere Teil (31) in die Richtung der besagten Längsachse des Stifts (7) geneigt ist, so dass der besagte untere Teil (31) sich an dem besagten unteren Ende der Setzstufe (15) näher an der besagten Längsachse des Stifts (7) befindet als an dem besagten unteren Ende der besagten Rampe (30).

13. Der Stift (7) gemäß irgend einem der Ansprüche 11 oder 12, **dadurch gekennzeichnet, dass** der besagte untere Teil (31) einen ausgesparten Teil (32) aufweist, der sich näher an der besagten Setzstufe (15) als an der besagten Rampe (30) befindet und der dazu dient, das besagte freie Ende (4) des besagten Flansches (3) aufzunehmen.

14. Ein Verschleißelement (16) einer Erdbewegungsmaschine, wobei das besagte Verschleißelement (16) einen Hohlraum (17) aufweist, wobei in einer zusammengebauten Position, in der das besagte Verschleißelement (16) an einem Tragelement montiert ist, eine Nase (19), die in dem besagten Tragelement vorhanden ist, in dem besagten Hohlraum (17) untergebracht ist, wobei der besagte Hohlraum (17) durch Seitenwände (18) abgegrenzt ist, wobei in zweien der besagten Seitenwände (18) zwei Durchgangsöffnungen, die einander gegenüber liegen, angeordnet sind, die auf einer Linie liegen und in der besagten zusammengebauten Position mit einer Durchgangs-Nasenöffnung (25), die in der besagten Nase (19) angeordnet ist, auf einer Linie liegen, wobei die besagten Öffnungen und die besagte Nasenöffnung (25) dafür geeignet sind, dass sie in sich einen Stift (7) aufnehmen, der dafür geeignet ist, dass er das besagte Verschleißelement (16) in der besagten Nase (19) in der besagten zusammengebauten Position festlegt, wobei die besagten Öffnungen eine Längsachse definiert, wobei die besagte Längsachse eine Einführ-Richtung aufweist, die der Richtung entspricht, in der der besagte Stift (7) in die besagten Öffnungen eingeführt wird, um die besagte zusammengebaute Position zu erreichen, wobei der besagte Stift (7) eine Längsachse des Stifts (7) definiert und ein erstes Ende (8) mit Betätigungsmitteln (11), die dafür geeignet sind, dass sie den Stift (7) gemäß seiner Längsachse drehen, und ein zweites Ende (10) aufweist, das dem besagten ersten Ende (8) gegenüber liegt, wobei in der besagten zusammengebauten Position das besagte erste Ende (8) in einer der besagten Öffnungen, die als Einlassöffnung (20) bezeichnet wird und eine Durchgangsöffnung ist, untergebracht ist und das besagte zweite Ende (10) in der anderen der besagten Öffnungen, die als Auslassöffnung (21) bezeichnet wird, untergebracht ist,
**dadurch gekennzeichnet, dass**:
das besagte Verschleißelement (16) eine Halterung (1) aufweist, die an der inneren Fläche der Seitenwand, die die besagte Auslassöffnung (21) aufweist, befestigt ist, wobei die besagte Halterung (1) aus einem Blatt-Material gebildet ist, das ein Rand-Segment (2) aufweist, das an der besagten inneren Fläche in einem Umfangsbereich der besagten Auslassöffnung (21) befestigt ist, und das einen flexiblen Flansch (3) aufweist, der an einem Ende mit dem besagten Rand-Segment (2) verbunden ist und sich in die Richtung der besagten Auslassöffnung (21) erstreckt, wobei das freie Ende (4) des flexiblen Flansches (3) sich im Inneren der besagten Auslassöffnung (21) befindet.

## Revendications

1. Engin de terrassement comprenant un élément de support avec un nez (19) approprié pour avoir un élément d'usure (16) assemblé sur ce dernier, au moyen d'une broche (7), ledit élément d'usure (16) comprenant une cavité (17), dans lequel, dans une position assemblée dans laquelle ledit élément d'usure (16) est assemblé sur ledit élément de support, ledit nez (19) est logé dans ladite cavité (17), dans lequel ladite cavité (17) est délimitée par des parois latérales (18) avec au moins une ouverture débouchante agencée dans l'une desdites parois latérales (18), dans lequel ledit nez (19) a une ouverture de nez (25) qui, dans ladite position assemblée, est alignée avec ladite ouverture débouchante dudit élément d'usure (16), dans lequel, dans ladite position assemblée, ladite broche (7) est logée dans ladite ouverture débouchante et ladite ouverture de nez (25), dans lequel ladite ouverture de nez (25) définit un axe longitudinal, ledit axe longitudinal ayant une direction d'insertion correspondant à la direction dans laquelle ladite broche (7) est introduite dans ladite ouverture débouchante afin d'obtenir ladite position assemblée,
**caractérisé en ce que**:
il comprend un dispositif de retenue (1) qui est formé à partir d'un matériau en feuille comprenant un segment périmétral (2) fixé à une région périmétrale de ladite ouverture de nez (25) et un onglet flexible (3) assemblé, au niveau d'une extrémité, audit segment périmétral (2) et s'étendant vers l'intérieur de ladite ouverture de nez (25).

2. Élément d'usure (16) d'un engin de terrassement, ledit élément d'usure (16) comprenant une cavité (17), dans lequel, dans une position assemblée dans laquelle ledit élément d'usure (16) est assemblé sur un élément de support, un nez (19) présent dans ledit élément de support est supporté dans ladite cavité (17), dans lequel ladite cavité (17) est délimitée par des parois latérales (18) avec une ouverture débouchante agencée dans l'une desdites parois latérales (18), qui est alignée, dans ladite position assemblée, avec une ouverture de nez (25) agencée dans ledit nez (19), dans lequel ladite ouverture débouchante et ladite ouverture de nez (25) sont appropriées pour loger, dans ces dernières, une broche (7) appropriée pour fixer ledit élément d'usure (16) dans ledit nez (19) dans ladite position assemblée, dans lequel ladite ouverture débouchante définit un axe longitudinal, dans lequel ledit axe longitudinal a une direction d'insertion correspondant à la direction dans laquelle ladite broche (7) est introduite dans ladite ouverture débouchante afin d'obtenir ladite position assemblée, dans lequel ladite broche (7) définit un axe longitudinal de la broche (7) et a une première extrémité (8) avec des moyens d'actionnement (11) appropriés pour faire tourner la broche (7) selon son axe longitudinal, et une seconde extrémité (10), opposée à ladite première extrémité (8), dans lequel, dans ladite position assemblée, ladite première extrémité (8) est logée dans ladite ouverture débouchante, indiquée comme étant l'ouverture d'entrée (20), et ladite seconde extrémité (10) est logée à l'intérieur de ladite ouverture de nez (25),
**caractérisé en ce que**:
ledit élément d'usure (16) comprend un dispositif de retenue (1) fixé sur la face interne de la paroi latérale comprenant ladite ouverture d'entrée (20), ledit dispositif de retenue (1) étant formé à partir d'un matériau en feuille comprenant un segment périmétral (2), fixé sur ladite face interne dans une région périmétrale de ladite ouverture d'entrée (20) et un onglet flexible (3) assemblé, au niveau d'une extrémité, audit segment périmétral (2) et s'étendant vers ladite ouverture de nez (25), dans lequel l'extrémité libre (4) de l'onglet flexible (3) reste décalée vers l'avant, selon ladite direction d'insertion, par rapport audit segment périmétral (2).

3. Dispositif de retenue (1) approprié pour bloquer une broche (7), ladite broche (7) étant appropriée pour fixer un élément d'usure (16) dans un élément de support d'un engin de terrassement, ledit élément d'usure (16) comprenant une cavité (17), dans lequel, dans une position assemblée dans laquelle ledit élément d'usure (16) est assemblé sur ledit élément de support, un nez (19) présent dans ledit élément de support est logé dans ladite cavité (17), dans lequel ladite cavité (17) est délimitée par des parois latérales (18) avec au moins une ouverture débouchante agencée dans l'une desdites parois latérales (18), dans lequel ledit nez (19) a une ouverture de nez (25) qui, dans ladite position assemblée, est alignée avec ladite ouverture débouchante dudit élément d'usure (16), dans lequel, dans ladite position assemblée, ladite broche (7) est logée dans ladite ouverture débouchante et ladite ouverture de nez (25), dans lequel ladite ouverture débouchante définit un axe longitudinal, ledit axe longitudinal ayant une direction d'insertion correspondant à la direction dans laquelle ladite broche (7) est introduite dans ladite ouverture débouchante afin d'obtenir ladite position assemblée, dans lequel ledit dispositif de retenue (1) est formé à partir d'un matériau en feuille comprenant un segment périmétral (2), dans lequel ledit segment périmétral (2) s'étend en formant un cadre périmétral clos (5) et est approprié pour être fixé à une région périmétrale de ladite ouverture débouchante ou de ladite ouverture de nez (25), et un onglet flexible (3) assemblé, au niveau d'une extrémité, audit segment périmétral (2), dans lequel ledit onglet (3) s'étend vers l'intérieur dudit cadre (5) et est approprié pour s'étendre vers ladite ouverture débouchante ou ladite ouverture de nez (25), dans lequel l'extrémité libre (4) de l'onglet flexible (3) est appropriée pour rester décalée vers l'avant, selon ladite direction d'insertion, par rapport audit segment périmétral (2),
**caractérisé en ce que**
ledit segment périmétral (2) a un premier moyen d'encliquetage (6) approprié pour être assemblé sur le second moyen d'encliquetage (22) présent dans ladite région périmétrale de ladite ouverture, fixant ainsi ledit dispositif de retenue (1) sur ladite région périmétrale dans la direction de l'axe longitudinal,
et **en ce que**
ledit dispositif de retenue (1) a deux onglets, agencés dans des régions opposées dudit cadre périmétral clos (5), lesdits onglets étant assemblés audit cadre périmétral clos (5) et s'étendant vers l'intérieur dudit cadre périmétral clos (5), dans lequel les extrémités libres (4) des deux onglets flexibles (3) sont appropriées pour rester décalées vers l'avant, selon ladite direction d'insertion, par rapport audit cadre périmétral clos (5).

4. Dispositif de retenue (1) selon la revendication 3, **caractérisé en ce que** ledit onglet (3) a des moyens de renforcement (29).

5. Dispositif de retenue selon la revendication 4, **caractérisé en ce que** ledit moyen de renforcement (29) est une région renforcée fabriquée par emboutissage profond.

6. Dispositif de retenue (1) selon l'une quelconque des revendications 3 à 5, **caractérisé en ce que** l'onglet (3) définit un axe d'onglet qui s'étend à partir de ladite extrémité par le biais de laquelle l'onglet (3) est assemblé audit segment périmétral (2), jusqu'à ladite extrémité libre (4), et **en ce qu'**une section dudit onglet (3) avec n'importe quel plan parallèle audit axe d'onglet et perpendiculaire à un plan comprenant ledit segment périmétral (2) a une première zone, à proximité de ladite extrémité par le biais de laquelle l'onglet (3) est assemblé audit segment périmétral (2), qui a une courbure qui est convexe, lorsqu'elle est observée à partir dudit plan comprenant ledit segment périmétral (2) et a une seconde zone, à proximité de ladite extrémité libre (4), qui a une courbure qui est concave, lorsqu'elle est observée à partir dudit plan comprenant ledit segment périmétral (2).

7. Broche (7) appropriée pour fixer un élément d'usure (16) dans un élément de support d'un engin de terrassement, ledit élément d'usure (16) comprenant une cavité (17), dans laquelle, dans une position assemblée dans laquelle ledit élément d'usure (16) est assemblé sur ledit élément de support, un nez (19) présent dans ledit élément de support est logé dans ladite cavité (17), dans laquelle ladite cavité (17) est délimitée par des parois latérales (18) avec au moins une ouverture débouchante agencée dans l'une desdites parois latérales (18), dans laquelle ledit nez (19) a une ouverture de nez (25) qui, dans ladite position assemblée, est alignée avec ladite ouverture débouchante dudit élément d'usure (16), dans laquelle, dans ladite position assemblée, ladite broche (7) est logée dans ladite ouverture débouchante et ladite ouverture de nez (25), dans laquelle ladite ouverture débouchante définit un axe longitudinal, ledit axe longitudinal ayant une direction d'insertion correspondant à la direction dans laquelle ladite broche (7) est introduite dans ladite ouverture débouchante pour obtenir ladite position assemblée, dans laquelle ladite broche (7) définit un axe longitudinal de la broche (7) et a une première extrémité (8) avec un moyen d'actionnement (11) approprié pour faire tourner la broche (7) selon son axe longitudinal, et une seconde extrémité (10), opposée à ladite première extrémité (8),
**caractérisée en ce que**:
ladite broche (7) a une région de fixation (12), dans laquelle ladite région de fixation (12) coïncide, dans la direction dudit axe longitudinal, avec ladite ouverture débouchante ou avec le commencement de ladite ouverture de nez (25) dans ladite position assemblée, dans laquelle ladite région de fixation (12) a un segment de blocage ayant une marche, dans laquelle la contremarche (15) de ladite marche est orientée vers ladite première extrémité (8) et est appropriée pour loger l'extrémité libre (4) d'un onglet flexible (3) d'un dispositif de retenue (1), lorsque ledit dispositif de retenue (1) est formé à partir d'un matériau en feuille comprenant un segment périmétral (2) et ledit onglet flexible (3) assemblé, au niveau d'une extrémité, audit segment périmétral (2), ledit segment périmétral (2) étant fixé à une région périmétrale de ladite ouverture débouchante ou de ladite ouverture de nez (25) et ledit onglet flexible (3) s'étendant vers ladite ouverture débouchante ou ladite ouverture de nez (25), dans laquelle l'extrémité libre (4) dudit onglet flexible (3) reste décalée vers l'avant, selon ladite direction d'insertion, par rapport audit segment périmétral (2), bloquant ainsi le mouvement axial de la broche (7) dans la direction opposée à la direction d'insertion, ladite région de fixation (12) comprenant également un segment de déblocage (14) agencé à la même distance que ledit segment de blocage, dans la direction dudit axe longitudinal de la broche (7), par rapport à ladite première extrémité (8), ledit segment de déblocage (14) étant déplacé, de manière angulaire, selon une rotation dudit axe longitudinal de la broche (7), par rapport audit segment de blocage, dans laquelle ledit segment de déblocage (14) n'a pas ladite marche mais a plutôt un segment lisse, dans lequel la surface latérale de la broche (7) s'étend de manière continue à l'extrémité de la seconde extrémité (10),
et **en ce que** lesdits moyens d'actionnement comprennent une ouverture coaxiale avec l'axe longitudinal de la broche et sont agencés au niveau de la première extrémité, dans laquelle l'ouverture a une section transversale non circulaire.

8. Broche (7) selon la revendication 7, **caractérisée en ce que** ladite région de fixation (12) a deux segments de blocage (13) agencés à la même distance, dans la direction dudit axe longitudinal de la broche (7), par rapport à ladite première extrémité (8) et agencés sur les côtés circonférentiellement opposés, dans laquelle chaque segment de blocage (13) a une marche, dans laquelle la contremarche (15) de chaque marche est orientée vers ladite première extrémité (8) et est appropriée pour loger l'extrémité libre (4) de chacun des onglets flexibles (3) d'un dispositif de retenue (1), lorsque ledit dispositif de retenue (1) a un segment périmétral (2) qui s'étend en formant un cadre périmétral clos (5) et deux onglets agencés dans des régions opposées dudit cadre périmétral clos (5), lesdits onglets étant assemblés audit cadre périmétral clos (5) et s'étendant vers l'intérieur dudit cadre périmétral clos (5), ledit cadre périmétral clos (5) étant fixé à une région périmétrale de ladite ouverture débouchante ou de ladite ouverture de nez (25), dans laquelle les extrémités libres (4) des deux onglets flexibles (3) sont appropriées pour rester décalées vers l'avant, selon ladite direction d'insertion, par rapport audit cadre périmétral clos (5), bloquant ainsi le mouvement axial de la seconde extrémité (10) dans la direction opposée à ladite direction d'insertion, ladite région de fixation (12) comprenant également deux segments de déblocage (14) agencés à la même distance que lesdits segments de blocage (13), dans la direction dudit axe longitudinal de la broche (7), par rapport à ladite première extrémité (8), lesdits segments de déblocage (14) étant déplacés de manière angulaire, selon une rotation dudit axe longitudinal de la broche (7), par rapport auxdits segments de blocage (13), dans laquelle lesdits segments de déblocage (14) n'ont pas ladite marche, mais ont plutôt un segment lisse, dans lequel la surface latérale de la broche (7) s'étend de manière continue vers l'extrémité de la seconde extrémité (10).

9. Broche (7) selon l'une des revendications 7 ou 8, **caractérisée en ce que** ladite région de fixation (12) est à proximité de ladite seconde extrémité (10).

10. Broche (7) selon l'une quelconque des revendications 7 à 9, **caractérisée en ce que** ladite contremarche (15) de ladite marche s'appuie contre ladite direction d'insertion à un angle supérieur à 0 degré, de sorte qu'une extrémité supérieure de ladite contremarche (15), davantage séparée dudit axe longitudinal de la broche (7) qu'une extrémité inférieure de ladite contremarche (15), est plus à proximité de ladite première extrémité (8) de la broche que ladite extrémité inférieure.

11. Broche (7) selon l'une quelconque des revendications 7 à 10, **caractérisée en ce que** ladite contremarche (15) a une extrémité supérieure, davantage séparée dudit axe longitudinal de la broche (7) qu'une extrémité inférieure de ladite contremarche (15), et ledit segment de blocage a une rampe (30) opposée à ladite contremarche (15) et une partie inférieure (31) s'étendant à partir de ladite extrémité inférieure de la contremarche (15) jusqu'à une extrémité inférieure de ladite rampe (30).

12. Broche selon la revendication 11, **caractérisée en ce que** ladite partie inférieure (31) est inclinée vers ledit axe longitudinal de la broche (7) de sorte que ladite partie inférieure (31) est plus à proximité dudit axe longitudinal de la broche (7) au niveau de ladite extrémité inférieure de la contremarche (15) qu'au niveau de ladite extrémité inférieure de ladite rampe (30).

13. Broche (7) selon l'une quelconque des revendications 11 ou 12, **caractérisée en ce que** ladite partie inférieure (31) a une partie enfoncée (32), plus à proximité de ladite contremarche (15) que de ladite rampe (30), pour loger ladite extrémité libre (4) dudit onglet (3).

14. Élément d'usure (16) d'un engin de terrassement, ledit élément d'usure (16) comprenant une cavité (17), dans lequel, dans une position assemblée dans laquelle ledit élément d'usure (16) est assemblé sur un élément de support, un nez (19) présent dans ledit élément de support est logé dans ladite cavité (17), dans lequel ladite cavité (17) est délimitée par des parois latérales (18) avec deux ouvertures agencées dans deux desdites parois latérales (18) opposées entre elles, qui sont alignées entre elles et alignées, dans ladite position assemblée, avec une ouverture de nez débouchante (25) agencée dans ledit nez (19), dans lequel lesdites ouvertures et ladite ouverture de nez (25) sont appropriées pour loger, à l'intérieur de ces dernières, une broche (7) appropriée pour fixer ledit élément d'usure (16) dans ledit nez (19) dans ladite position assemblée, dans lequel lesdites ouvertures définissent un axe longitudinal, dans lequel ledit axe longitudinal a une direction d'insertion correspondant à la direction dans laquelle ladite broche (7) est introduite dans lesdites ouvertures afin d'obtenir ladite position assemblée, dans lequel ladite broche (7) définit un axe longitudinal de la broche (7) et a une première extrémité (8) avec des moyens d'actionnement (11) appropriés pour faire tourner la broche (7) selon son axe longitudinal, et une seconde extrémité (10), opposée à ladite première extrémité (8), dans lequel, dans ladite position assemblée, ladite première extrémité (8) est logée dans l'une desdites ouvertures, désignée comme étant l'ouverture d'entrée (20), qui est une ouverture débouchante, et ladite seconde extrémité (10) est logée dans l'autre desdites ouvertures, désignée comme étant l'ouverture de sortie (21),
**caractérisé en ce que** :
ledit élément d'usure (16) comprend un dispositif de retenue (1) fixé sur la face interne de la paroi latérale comprenant ladite ouverture de sortie (21), ledit dispositif de retenue (1) étant formé à partir d'un matériau en feuille comprenant un segment périmétral (2), fixé sur ladite face interne dans une région périmétrale de ladite ouverture de sortie (21), et un onglet flexible (3) assemblé, au niveau d'une extrémité, audit segment périmétral (2) et s'étendant vers ladite ouverture de sortie (21), dans lequel l'extrémité libre (4) dudit onglet flexible (3) est à l'intérieur de ladite ouverture de sortie (21).
